# EUROPÄISCHE PATENTSCHRIFT

(11) **EP 2 887 010 B1**
(45) Veröffentlichungstag und Bekanntmachung des Hinweises auf die Patenterteilung: **04.09.2019**
(21) Anmeldenummer: 14195437.0
(22) Anmeldetag: 28.11.2014
(51) Int. Cl.: G01B 11/25, G01B 21/20

(54) **Verfahren und Vorrichtung zum dreidimensionalen optischen Vermessen von Objekten mit einem topometrischen Messverfahren sowie Computerprogramm hierzu**
Method and device for three dimensional optical measurement of objects with a topometric measuring method and computer programme for same
Procédé et dispositif de mesure optique en trois dimensions d'objets avec un procédé de mesure topométrique ainsi que programme informatique correspondant

(30) Priorität: 20.12.2013 DE 102013114687
(43) Veröffentlichungstag der Anmeldung: 24.06.2015
(73) Patentinhaber: GOM GmbH, 38122 Braunschweig (DE)
(72) Erfinder: Kayser, Philipp, 38102 Braunschweig (DE)
(74) Vertreter: Gerstein, Hans Joachim

(56) Entgegenhaltungen:
- EP-A1- 0 294 577
- WO-A1-2004/111571
- DE-C5-102008 015 499

## Beschreibung

Die Erfindung betrifft ein Verfahren zum dreidimensionalen optischen Vermessen von Objekten mit einem topometrischen Messverfahren mittels Projektion mindestens eines Musters auf ein Objekt mit einem Mustergenerator und Aufnehmen mindestens einer Abbildung des Objektes mit dem aufprojizierten Muster mit mindestens einer Bildaufnahmeeinheit zur topometrischen Vermessung des Objektes.

Die Erfindung betrifft weiterhin eine Vorrichtung zum dreidimensionalen optischen Vermessen von Objekten mit einem topometrischen Messverfahren, wobei die Vorrichtung einen topometrischen Sensor, der mindestens eine Projektionseinheit zur Beleuchtung von Teilflächen eines Objektes mit wahlweisen Projektionsmuster-Segmenten eines auswählbaren Projektionsmusters und mindestens eine Bildaufnahmeeinheit umfasst, sowie eine Steuereinheit und eine Auswerteeinheit zur topometrischen Auswertung der mit der Bildaufnahmeeinheit aufgenommenen Bilder des zu vermessenden Objektes beinhaltet.

Die Erfindung betrifft weiterhin ein Computerprogramm mit Programmcodemitteln zur Durchführung des oben beschriebenen Verfahrens, wenn das Computerprogramm auf einer Datenverarbeitungseinrichtung ausgeführt wird.

Die dreidimensionale optische Erfassung von Objektoberflächen mittels optischer Triangulationssensoren nach dem Prinzip der Topometrie ist hinreichend bekannt. Hierbei werden Muster, insbesondere Streifenmuster, auf das zu vermessende Objekt projiziert. Das rückgestreute Muster wird von einer oder mehreren Bildaufnahmeeinheiten (in der Regel Kameras) aufgenommen und anschließend durch eine Bildauswerteeinheit ausgewertet.

Die durch die Projektionseinheit projizierten Muster können mannigfaltig ausgestaltet sein. Typische projizierte Muster sind stochastische Muster sowie regelmäßige Muster, z. B. Punkt- und Streifenmuster. Insbesondere Streifenmuster haben sich als gängige Muster im Rahmen der optischen 3D-Messung etabliert.

Durch das projizierte Muster entsteht auf dem zu vermessenden Objekt eine künstliche, temporäre Textur. Diese wird durch eine oder mehrere Bildaufnahmeeinheiten erfasst. Anhand der künstlich erzeugten, im allgemeinen a priori bekannten Textur können beleuchtete 3D-Punkte auf dem zu vermessenden Objekt eindeutig sowohl in der Projektionseinheit, als auch der einen oder mehreren Bildaufnahmeeinheiten identifiziert werden.

Durch ein Triangulationsverfahren (im Allgemeinen durch Vorwärtsschnitt) können die 3D-Koordinaten bestimmt werden. Dazu muss der gleiche Objektpunkt in mindestens zwei räumlich verschiedenen Aufnahmepositionen gemessen werden. Die Projektionseinheit kann dabei als inverse Kamera fungieren, so dass zur Bestimmung der 3D-Koordinaten die Messung mit einer Kamera ausreicht. In vielen Fällen kann es jedoch hilfreich sein, mehrere Kameras zur Erfassung der projizierten Textur zu verwenden. Die Projektionseinheit wird oftmals nur als Texturgeber genutzt und nicht bei der 3D-Punkt-Berechnung berücksichtigt, da die innere und äußere Orientierung der Projektionseinheit aufgrund ihrer im Vergleich zu einer Kamera großen Masse und höheren Temperatur (aufgrund der Strahlungsquelle) häufig instabiler als für die beteiligten Kameras ist.

Die Projektionseinheit umfasst drei Kernbestandteile. Diese sind eine Beleuchtungseinheit, ein Mustergenerator und eine Projektionsoptik. Die Beleuchtungseinheit stellt elektromagnetische Strahlung bereit. Je nach Ausführung der Beleuchtungseinheit wird elektromagnetische Strahlung mit charakterisierenden Eigenschaften erzeugt. Diese sind insbesondere der Wellenlängenbereich, in dem die Lichtquelle Strahlung emittiert, sowie die Leistung.

Der Mustergenerator erzeugt ein Muster, welches durch die Beleuchtungseinheit beleuchtet wird. Anschließend wird das Muster mit Hilfe der Projektionsoptik auf das zu vermessende Objekt projiziert. Der Mustergenerator kann mannigfaltig ausgestaltet sein. So können z. B. Glasdias verwendet werden, welche das zu projizierende Muster enthalten. Es ist ebenfalls möglich, dass das Dia bezüglich der Lichtquelle in Bewegung gebracht wird (z. B. Rotation und/oder Translation). Darüber hinaus können programmierbare Displays, wie Liquid-Crystal-on-Silicon (LCoS), Liquid-Crystal-Display (LCD) und digitale Mikrospiegeleinheiten (Digital Micromirror Device - DMD) eingesetzt werden. Sie zeichnen sich durch getrennt ansteuerbare Einzelelemente aus. Je nach Ausführungsform werden Sie als Pixel (LCoS, LCD) bzw. als Mikrospiegel (DMD) bezeichnet. Programmierbare Mustergeneratoren mit programmierbaren Displays bieten eine Reihe von Vorteilen gegenüber analogen Mustergeneratoren. Insbesondere können prinzipiell unendlich verschiedene Muster projiziert werden.

Die präzise Bestimmung des abgebildeten Objektpunktes in der jeweiligen Bildaufnahmeeinheit setzt in der Regel voraus, dass das vom Objekt rückgestreute Mustersignal nicht durch andere Signale, insbesondere weitere, anders artige Mustersignale, signifikant überlagert wird. Je nach den Eigenschaften dieser zusätzlichen Signale (z. B. zeitliche Konstanz, Intensität, etc.) sowie des Musterprojektionsverfahrens reichen die Auswirkungen von einer Verschlechterung des Signal-Rausch-Verhältnisses bis zu einer systematischen Verfälschung der Mustermessung.

Ein besonderes Problem bei einem dreidimensionalen optischen Vermessen von Objekten mit einem topometrischen Messverfahren tritt dann auf, wenn das projizierte Muster auf dem beleuchteten Objekt mehrfach reflektiert wird. Dies ist abhängig von der inneren und äußeren Orientierung der Projektionseinheit, der Geometrie des Objektes, der Lage und Ausrichtung des Objektes zur Projektionseinheit, sowie den Reflexionseigenschaften des Objektes. In Abhängigkeit von der inneren und äußeren Orientierung der mindestens einen Bildaufnahmeeinheit können sich in einem Bildbereich das direkt rückgestreute Mustersignal des beobachteten Objektpunktes, sowie ein mehrfach reflektiertes anderes Mustersignal, welches ursprünglich einen anderen Objektpunkt beleuchtet hat, überlagern.

Die zusätzlichen Signalanteile durch Mehrfachreflexion des Musters am Objekt sind für verschiedene Muster nicht konstant. Insbesondere bei einer Streifenprojektion führen diese Mehrfachreflexionen zu fehlerhaften Phasenmessungen und nachfolgend zu falschen 3D-Punkten.

Aus der DE 10 2008 015 499 C5 ist ein Verfahren und eine Vorrichtung zur Bestimmung der 3D-Koordinaten eines Objektes bekannt, welche Messfehler aufgrund von spiegelnder Reflexion des Musters am Objekt zu vermeiden suchen. Dazu wird ein Muster auf das Objekt projiziert und das vom Objekt reflektierte Muster aufgenommen und ausgewertet. Anschließend werden die Oberflächennormalen der gemessenen Objektpunkte und deren Ausrichtung zum Projektor bestimmt. Anhand der Oberflächennormale werden die Objektpunkte in mindestens zwei Klassen eingeteilt. Anschließend wird in einem ersten Schritt ein Muster auf den ersten Teilbereich des Objektes projiziert und das von diesem Teilbereich reflektierte Muster aufgenommen. Nachfolgend wird in einem zweiten Schritt ein Muster auf den zweiten Teilbereich des Objektes projiziert und das von diesem Teilbereich reflektierte Muster aufgenommen. Aufgrund der eindeutigen Zuordnung der Objektpunkte anhand der Oberflächennormale zu jeweils einem Teilbereich überlappen sich die Teilbereiche nicht. Allerdings müssen die Lage und die Orientierung des Objektes bezüglich des Projektors und der beteiligten Bildaufnahmeeinheiten sowie die Oberflächennormalen vor der Berechnung der Teilbereiche bekannt sein. Hierzu soll die Lage und Orientierung des Objektes sowie dessen Oberflächennormalen entweder durch eine vorherige "grobe" Messung bestimmt oder aus einem CAD-Datensatz abgeleitet werden. Bei Verwendung eines CAD-Datensatzes müssen die Lage und die Orientierung des Objektes bezüglich des Sensors vorgegeben sein. Die anschließende Einteilung der Objektpunkte anhand der Lage ihrer Oberflächennormale bezüglich des jeweiligen Projektionsstrahls in Teilbereichen basiert auf der Annahme, dass eine spiegelnde Reflexion auftritt. Die Aufteilung der Teilbereiche erfolgt anhand der Oberflächennormale von Objektpunkten im Objektraum.

EP 0 294 577 A1 beschreibt ein optisches System zur Vermessung von Oberflächenkonturen mit einem Sensor zur Erzeugung von Repräsentationen ausgewählter Bildmuster, die auf die Oberfläche projiziert sind. Die projizierten Muster haben erkennbare lineare Merkmale, die entsprechend einer solchen Codierung ortsabhängig angeordnet sind, dass die Position der Linien in den unterschiedlichen Mustern lokalisierbar sind.

WO 2004/111571 A1 offenbart eine Vorrichtung zur Bestimmung der Oberfläche und der Größe eines dreidimensionalen Objektes mit mehreren Messeinheiten, die jeweils einen Projektor und eine Kamera haben. Um eine Störung dieser Messeinheiten untereinander zu vermeiden arbeitet jede Messeinheit auf einer-spezifischen Wellenlänge.

Ein Problem tritt jedoch dadurch auf, dass je nach Art, Beschaffenheit und ggf. Vorbehandlung des zu vermessenden Objektes die Reflexionseigenschaften deutlich unterschiedlich sind. Diese können zwischen einer idealen diffusen Reflexion über eine gerichtete Reflexion bis hin zur spiegelnden Reflexion variieren. Sie können sich sogar innerhalb eines Objektes deutlich unterschiedlich ausprägen. Darüber hinaus kann nicht nur spiegelnde Reflexion zur Mehrfachreflexion führen, welche die Mustermessung in der jeweiligen Bildaufnahmeeinheit systematisch verfälschen kann. Durch die implizite Modellannahme, dass nur spiegelnde Reflexion auftritt, wird die allgemein deutlich komplexere Realität nur unzureichend abgebildet. Dies führt zu einer suboptimalen Teilbereichsbildung, bei der weiterhin die Mustermessung in einigen Bereichen systematisch verfälscht sein kann. Weiterhin können auch Teilbereiche in Messbereichen des zu vermessenden Objektes gebildet werden, in denen die Bildung von Teilbereichen praktisch überhaupt nicht nötig ist. Zudem wird nur das Auftreten von Doppelreflexionen berücksichtigt. Es treten aber durchaus Fälle auf, in denen das Signal mehr als zweimal in dem Objekt reflektiert wird.

Aufgabe der vorliegenden Erfindung ist es daher, ein verbessertes Verfahren und eine Vorrichtung zum dreidimensionalen optischen Vermessen von optischen Objekten mit einem topometrischen Messverfahren zu schaffen, um Messfehler, die aus Mehrfachreflexionen des projizierten Musters an dem Objekt und einer anschließenden Überlagerung unterschiedlicher Mustersignalanteile in einer oder mehreren Bildaufnahmeeinheiten resultieren, bestmöglich zu reduzieren oder bestenfalls sogar ganz zu vermeiden.

Die Aufgabe wird mit dem Verfahren mit den Merkmalen des Anspruchs 1 sowie mit der Vorrichtung mit den Merkmalen des Anspruchs 12 sowie das Computerprogramm mit den Programmcodemitteln mit den Merkmalen des Anspruchs 16 gelöst.

Vorteilhafte Ausführungsformen sind in den Unteransprüchen beschrieben.

Bei dem erfindungsgemäßen Verfahren sind folgende Schritte vorgesehen:
a) Ermitteln von Teilflächen in mehreren Abbildungen je beteiligter Bildaufnahmeeinheit des Objektes, die ein von dem Objekt rückgestreutes Signal eines jeweils auf das Objekt projizierten Projektionsmuster-Segmentes des Mustergenerators enthalten,
b) Erstellen von mindestens einer Projektionsmaske, welche jeweils mehrere Projektionsmuster-Segmente umfasst, wobei die Projektionsmuster-Segmente einer Projektionsmaske so ausgewählt sind, dass sich die ermittelten Teilflächen der Projektionsmuster-Segmente in den Abbildungen je beteiligter Bildaufnahmeeinheit nicht gegenseitig überlappen, und
c) Durchführen der topometrischen Vermessung des Objektes jeweils durch Projektion mindestens eines Musters mittels der mindestens einen erstellten Projektionsmaske.

Das auf ein Objekt aufprojizierte Muster wird somit in definierte Segmente z. B. durch geeignete Programmierung eines Mustergenerators unterteilt. Für jedes Projektionsmuster-Segment werden nun Teilflächen in den Abbildungen ermittelt, die das rückgestreute Signal dieses Projektionsmuster-Segmentes am Objekt enthalten. Sofern mehrere Bildaufnahmeeinheiten verwendet werden, muss für jede Bildaufnahmeeinheit exklusiv analysiert werden, welche Teilflächen sich überlappen. Hieraus wird dann mindestens eine Projektionsmaske derart erstellt, dass sich durch verschiedene Projektionsmuster-Segmente eines Projektionsmusters beleuchtete Teilflächen je beteiligter Bildaufnahmeeinheit nicht überlagern. Anschließend wird die topometrische Messung des Objekts durch Projektion des Musters mittels der mindestens einen erstellten Projektionsmaske durchgeführt. Bei Mehrfachreflexionen, die durch Projektion des vollständigen Musters auf das Objekt auftreten würden, ergeben sich dann mehrere Projektionsmasken, die getrennt nacheinander auf das Objekt projiziert werden. Für den Sonderfall, dass keine streuenden Reflexionen auftreten, kann die topometrische Messung des Objektes mit Hilfe einer einzigen Projektionsmaske durchgeführt werden, die dann das gesamte Muster enthält. Diese einzige Projektionsmaske ist dann aber ein Resultat der vorherigen Überprüfung, ob tatsächlich keine Überschneidung von beleuchteten Teilflächen durch einzelne Projektionsmuster-Segmente auftreten.

Wie bereits erläutert wurde, kann die Erfindung mit einem topometrischen Sensor durchgeführt werden, der eine oder mehrere Bildaufnahmeeinheiten beinhaltet. Sofern mehr als eine Bildaufnahmeeinheit verwendet wird, muss die Analyse der Teilflächen je zugehörigem Projektionsmuster-Segment hinsichtlich einer Überschneidung mit einer oder mehreren anderen Teilflächen einer oder mehreren zugehörigen Projektionsmuster-Segmenten in jeder Bildaufnahmeeinheit getrennt erfolgen. Es werden also explizit keine Teilflächen aus Abbildungen von verschiedenen Bildaufnahmeeinheiten hinsichtlich Überschneidungen abgeglichen. Zur Erstellung der Projektionsmasken werden die Überschneidungsergebnisse je Bildaufnahmeeinheit aber zusammen betrachtet. So können zum Beispiel nur dann zwei Projektionsmuster-Segmente Teil einer gemeinsamen Projektionsmaske sein, wenn ihre zugehörigen Teilflächen jeweils getrennt betrachtet in jeder beteiligten Bildaufnahmeeinheit jeweils keine überschneidenden Teilflächen aufweisen.

Das Verfahren hat den Vorteil, dass keine impliziten Annahmen für das Reflexionsverhalten erforderlich sind sowie die Lage und Ausrichtung des Objektes zum topometrischen Sensor nicht bekannt sein muss. Deshalb ist keine vorherige dreidimensionale Vermessung des Objektes erforderlich. Mit dem Verfahren kann eine Verfälschung des Messergebnisses auch bei Auftreten von Mehrfachreflexionen ausgeschlossen werden.

Das Verfahren und die zur Durchführung dieses Verfahrens eingerichtete Vorrichtung beruhen auf der Überlegung, dass Messfehler genau dann auftreten, wenn sich im jeweiligen Messbild unterschiedliche Signalanteile des auf das Objekt projizierten und anschließend an diesem zurückgestreuten Musters an der auszuwerten Bildposition überlagern, wobei Mehrfachreflexionen des Musters für die Überlagerung und die daraus resultierenden Messfehler ursächlich sind. Eine ungestörte Messung wird dann ermöglicht, wenn im Rahmen einer Messung eines Musters an einer oder mehreren auszuwertenden Bildpositionen durch selektive Projektion eines Teils des ursprünglichen Musters die Überlagerungen vermieden werden. Hierzu ist die Information erforderlich, welche Musteranteile sich an der jeweiligen auszuwertenden Bildposition überlagern. Genau diese Musteranteile dürfen dann nicht gleichseitig projiziert werden. Diese Information kann beispielsweise dadurch gewonnen werden, dass jeder Musteranteil, d. h. jedes Projektionsmuster-Segment, einzeln projiziert wird, wobei jeweils ein Messbild pro beteiligter Bildaufnahme aufgenommen und nachfolgend alle Messbilder hinsichtlich reflektierter Musteranteile für jede Bildposition ausgewertet werden. Die Kenntnis darüber, ob der jeweilig reflektierte Musteranteil aus einer direkter Reflexion, d. h. einer einmaligen Reflexion am Objekt, oder einer indirekten Reflexion, d. h. einer Mehrfachreflexion am Objekt, herrührt, spielt dabei keine Rolle.

Der Schritt a) des Ermittelns der Teilflächen in mehreren Abbildungen des Objektes je beteiligter Bildaufnahmeeinheit kann beispielsweise dadurch erfolgen, dass das Objekt mittels Projektion durch mindestens ein Projektionsmuster-Segment beleuchtet wird. Dann werden die Teilflächen in den Abbildungen je beteiligter Bildaufnahmeeinheit detektiert, die ein vom beleuchteten Objekt rückgestreutes Signal eines jeweils projizierten Projektionsmuster-Segmentes des Mustergenerators enthalten. Daraufhin erfolgt ein Zuordnen der detektierten Teilflächen jeweils zu einem zugehörigen Projektionsmuster-Segment.

Dieses Ermitteln der Teilflächen kann sequentiell für sich nicht überlappende Projektionsmuster-Segmente zeitlich hintereinander erfolgen. Im einfachsten Fall wird das gesamte Projektionsmuster in eine Vielzahl von z. B. rechteckförmigen Projektionsmuster-Segmenten aufgeteilt und das Objekt dann sequentiell hintereinander exklusiv mit jeweils einem Projektionsmuster-Segment ausgeleuchtet. Es wird dann erfasst, welche Teilflächen von jeweils einem Projektionsmuster-Segment beleuchtet werden. Hieraus kann dann z. B. mit Hilfe einer Ausschlusstabelle festgelegt werden, welche Projektionsmuster-Segmente gleichzeitig auf ein Objekt projiziert werden können, ohne dass sich von den mehreren Projektionsmuster-Segmenten beleuchtete Teilflächen überschneiden.

Denkbar ist aber auch, dass das Ermitteln der Teilflächen parallel für mehrere sich nicht überlappende Projektionsmuster-Segmente zeitlich zusammen erfolgt.

Bei der Projektion von Projektionsmuster-Segmenten des Mustergenerators auf ein Objekt beleuchten diese aktivierten Projektionsmuster-Segmente das Objekt exklusiv, ohne das andere Bereiche der Fläche eines Mustergenerators aktiv sind und elektromagnetische Strahlung in diesen Bereichen auf das Objekt abgeben.

Unter dem Begriff Objekt ist im Rahmen dieser Erfindung nicht nur der primär zu vermessenden Gegenstand zu verstehen. Vielmehr umfasst dieser Begriff auch die Summation eines oder mehrerer zu vermessender Gegenstände sowie die sie gegebenenfalls umgebenden Hintergrundkörper. Für das Verfahren und die Vorrichtung ist es unerheblich, welches Objekt (z.B. primär zu vermessender Gegenstand und/oder Hintergrundkörper) für die Mehrfachreflexion verantwortlich ist. Dies ist im Allgemeinen auch nicht möglich, da die Position und Ausrichtung des zu vermessenden Gegenstands für das Verfahren nicht vorbekannt sein muss. Die spätere Aufspaltung der 3D-Daten in die Messdaten, welche den zu vermessenden Gegenstand betreffen und die Messdaten, welche den umgebenden Hintergrundkörper betreffen ist dagegen eine Standard-Teilaufgabe im Rahmen der topometrischen Messung. Dafür gibt es eine Vielzahl von Methoden. Sie sind nicht Teil der Erfindung und werden als zum fachmännischen Können zählend deswegen nicht weiter beschrieben.

Vorzugsweise erfolgt das Ermitteln der Teilflächen ohne Berücksichtigung eines für die spätere topometrischen Messung genutzten speziellen Musters, wie beispielsweise eines Streifenmusters, sondern erfolgt einfach durch Aktivierung eines Bereichs des Mustergenerators und des zugehörigen Projektors so, dass das Objekt durch Aktivierung des Segmentes ausschnittsweise einfach mit gleichmäßiger elektromagnetischer Strahlung beaufschlagt wird.

Besonders vorteilhaft ist es, wenn mehrere Projektionsmuster-Segmente gleichzeitig das Objekt beleuchten und dennoch eine eindeutige Zuordnung der ermittelten Teilflächen zum jeweilig ursächlichen Projektionsmuster-Segment aus einer Abbildung erfolgen kann, da so die Anzahl der notwendigen Bildaufnahmen deutlich reduziert wird und das Verfahren deutlich schneller wird. Dies ist möglich, wenn jeweils die Position und die maximal mögliche Ausdehnung der Teilflächen mindestens zweier Projektionsmuster-Segmente in der Abbildung z.B. aufgrund von Vorinformationen auf eine Untermenge der Gesamtfläche der Abbildung reduziert werden kann.

Bei dieser bevorzugten Ausführung werden dazu die definierten Projektionsmuster-Segmente in einer Art hierarchischer Baumstruktur mit einer oder mehreren logischen Ebenen (n) aufgeteilt. Mehrere benachbarte Projektionsmuster-Segmente der i+1. Ebene (bzw. Hierarchieebene) bilden dabei zusammen ein übergeordnetes Projektionsmuster-Segment der i. Ebene, d. h. ein Element der Baumstruktur der nächst höheren Ebene. Mehrere benachbarte Elemente dieser nächst höheren Ebene, d. h. mehrere benachbarte übergeordnete Projektionsmuster-Segmente können wiederum ein Element der diesbezüglich nächst höheren Ebene bilden. Die Anzahl der gewählten Ebenen (n) ist prinzipiell beliebig. Sie ist aber durch die Anzahl der Projektionsmuster-Segmente des Mustergenerators sowie die Anzahl der Segmente (und nachfolgend der Elemente der jeweilig nächst höheren Ebene), die jeweils ein Element der nächst höheren Ebene bilden, limitiert. Wichtig ist, dass die Schnittmenge (Durchschnitt) aller Elemente einer Ebene immer eine leere Menge ist und die Summe (Vereinigung) aller Elemente einer Ebene immer der gleichen vordefinierten Fläche (z.B. die gesamte Fläche oder auch eine Teilfläche) des Mustergenerators entspricht.

Für die praktische Umsetzung dieses hierarchischen Verfahrens kann beispielsweise die Quad-Tree-Struktur genutzt werden, bei der eine Elternfläche in vier gleichartige Kindflächen unterteilt wird. Die Projektionsmuster-Segmente können so in mehreren (n) Ebenen angeordnet werden.

Die bevorzugte Ausführung basiert auf folgender Grundlage. Für den Fall, dass zwei oder mehr Elemente einer Hierarchieebene keine gemeinsam beleuchteten Teilflächen haben, so haben auch die davon abhängigen untergeordneten Elemente bzw. Projektionsmuster-Segmente des Mustergenerators keine gemeinsamen Teilflächen. Diese Tatsache ermöglicht die Beschleunigung des Verfahrens durch eine gemeinsame Beleuchtung des Objektes mit Elementen einer Hierarchieebene (definierten Projektionsmuster-Segmenten), deren übergeordneten Elemente jeweils miteinander keine gemeinsam beleuchteten Teilflächen für alle beteiligten Bildaufnahmeeinheiten umfassen.

Unter der Annahme der vorherigen Auswertung des jeweiligen übergeordneten Baumstrukturelementes ist die Position und Größe der zugehörigen Teilflächen bekannt. Ein untergeordnetes Baumstrukturelement bzw. ein untergeordnetes Projektionsmuster-Segment kann deshalb auch nur eine Unterfläche der entsprechenden Teilfläche(n) bzw. maximal die gleiche Teilfläche(n) beleuchten. Somit ist bei gleichzeitiger Beleuchtung des Objektes mit untergeordneten Baumstrukturelementen, d. h. mit den zugehörigen Projektionsmuster-Segmenten, deren übergeordnete Baumstrukturelemente jeweils miteinander keine gemeinsam beleuchteten Teilflächen für alle beteiligten Bildaufnahmeeinheiten umfassen, eine eindeutige Zuordnung jeder Teilfläche zu dem jeweiligen untergeordneten Baumstrukturelement, d.h. dem definierten untergeordneten Projektionsmuster-Segment aufgrund der Kenntnis der Position und Größe der Teilflächen der zugehörigen übergeordneten Baumstrukturelemente (übergeordnete Projektionsmuster-Segmente) möglich.

Das Verfahren kann nun dahingehend optimiert werden, dass zuerst für ein oder mehrere übergeordnete Baumstrukturebenen die zugehörigen Teilflächen bestimmt werden und aufgrund der Analyse dieser Teilflächen für die nachfolgenden Baumstrukturebenen eine gemeinsame Beleuchtung des Objektes durch untergeordnete Baumstrukturelemente (untergeordnete Projektionsmuster-Segmente) erfolgt, deren übergeordnete Baumstrukturelemente keine gemeinsamen Teilflächen haben. Dafür fallen die zugehörigen Einzelmessungen, bei denen das Objekt jeweils nur durch ein untergeordnetes Baumstrukturelement bzw. ein untergeordnetes Projektionsmuster-Segment beleuchtet wird, weg.

Dies heißt, dass die ersten Messungen (zumindest der obersten Hierachieebene) unabhängig vom zu messenden Objekt, d. h. unabhängig von der Position, Orientierung, Reflexionseigenschaften etc. des Objektes, immer gleichartig durchgeführt werden, indem die Teilflächen der übergeordneten Baumstrukturelemente ermittelt werden. Die Anzahl und Ausprägung der nachfolgenden Messungen werden hingegen durch Analyse der vorherigen Messungen dynamisch (on the fly) und damit abhängig von den Eigenschaften des zu vermessenden Objektes durchgeführt. Die Anzahl der hierdurch eingesparten Messungen ist von mehreren Faktoren abhängig, wie z. B. von der Anzahl der Baumstrukturebenen, von Auswahlkriterien für gleichzeitig zu projizierende untergeordnete Baumstrukturelemente und/oder Projektionsmuster-Segmente sowie insbesondere der Anzahl von in den übergeordneten Baumstrukturelementen auftretenden Mehrfachreflexionen (Überlappung von Teilflächen).

Das vorgeschlagene optimierte Verfahren umfasst somit folgende Schritte:
- Definieren übergeordneter Projektionsmuster-Segmente, die eine Anzahl räumlich benachbarter Projektionsmuster-Segmente des Mustergenerators umfassen, wobei die übergeordneten Projektionsmuster-Segmente zusammen mit den Projektionsmuster-Segmenten des Mustergenerators eine hierarchische Ordnung von n Ebenen bilden (n≥2),
- Aufnehmen je einer Abbildung je beteiligter Bildaufnahmeeinheit für jedes übergeordnete Projektionsmuster-Segment der obersten Hierarchieebene des Mustergenerators, wobei das jeweilige übergeordnete Projektionsmuster-Segment exklusiv das Objekt beleuchtet,
- Sequenzielles Durchführen folgender Unterschritte für jede Hierarchieebene mit Ausnahme der obersten Hierarchieebene
   ∘ Bilden von Teilmengen von mehreren Projektionsmuster-Segmenten der i. Hierarchieebene, mit folgenden Eigenschaften:
      ▪ Je Teilmenge haben die übergeordneten Projektionsmuster-Segmente der (i-1).ten Hierarchieebene keine sich überlappenden Teilflächen je beteiligter Bildaufnahmeeinheit.
      ▪ Je übergeordnetem Projektionsmuster-Segment der (i-1).ten. Hierarchieebene ist maximal ein Projektionsmuster-Segment der i. Hierarchieebene Mitglied der jeweiligen Teilmenge.
      ▪ Die Summe aller Teilmengen der i. Hierarchieebene umfasst eine vordefinierte Menge der Projektionsmuster-Segmente der i. Hierarchieebene des Mustergenerators.
   ∘ Aufnehmen von einer Abbildung je beteiligter Bildaufnahmeeinheit für jede Teilmenge der i. Hierarchieebene, wobei die jeweiligen zugehörigen Projektionsmuster-Segmente der Teilmenge exklusiv das Objekt beleuchten.

Besonders vorteilhaft ist es, wenn die Analyse der Messbilder der übergeordneten Baumstrukturelemente bzw. der definierten Projektionsmuster-Segment in Echtzeit erfolgt. Unter Echtzeit wird verstanden, dass die Messung und Analyse in einem Prozess unmittelbar aufeinander folgend ausgeführt wird und dabei die Messung und Analyse zeitlich überlappend erfolgt. Dies bedeutet, dass die notwendigen Auswerteschritte zur Bestimmung der Teilflächen für jedes Messbild, die Analyse, welche Teilflächen welcher Messung sich überlappen, die Bestimmung von untergeordneten Baumstrukturelementen bzw. Projektionsmuster-Segmenten, welche zeitgleich das Objekt beleuchten können, innerhalb von wenigen Millisekunden durchgeführt werden. Dabei können diese Auswerteschritte zu einem großen Teil parallel zu weiteren notwendigen Arbeitsschritten, wie die Ansteuerung des Mustergenerators zur Beleuchtung des Objektes, die Aufnahme eines Messbildes je Bildaufnahmeeinheit, die Übertragung jedes Messbildes in die Auswerteeinheit etc. durchgeführt werden. Damit liegen die zur Bestimmung der einen oder mehreren Projektionsmasken notwendigen Informationen je nach Anzahl der dafür notwendigen Messbilder üblicherweise innerhalb von mehreren Sekunden bis zu maximal einer Minute vor. Dabei ist die Gesamtzeit unter anderem sehr stark abhängig von der Belichtungszeit pro Messbild sowie der Anzahl der Messbilder, die wiederum insbesondere von den Reflexionseigenschaften sowie der Position und Ausrichtung des Objektes abhängt.

Die Projektionsmuster-Segmente haben bevorzugt identische Größen. Optional ist aber auch denkbar, dass die Projektionsmuster-Segmente unterschiedliche Größen voneinander haben.

Besonders vorteilhaft ist es, wenn ein Klassifizieren der ermittelten Teilflächen in den Abbildungen in eine direkte Reflexionsfläche, bei der das Signal eines Projektionsmuster-Segmentes nach einmaliger Reflexion direkt von dem Objekt rückgestreut wird, und in eine indirekte Reflexionsfläche, bei der das Signal eines Projektionsmuster-Segmentes nach mehrfacher Reflexion am Objekt von dem Objekt rückgestreut wird, durchgeführt wird. Es erfolgt dann ein Zuordnen der indirekten Reflexionsflächen jeweils zu den Projektionsmuster-Segmenten, welche die zugeordnete indirekte Reflexionsfläche direkt beleuchten. Damit wird jede Teilfläche eines Messbildes in eine direkte oder in eine indirekte Reflexionsfläche klassifiziert. Aufgrund ihrer unterschiedlichen Entstehung weisen die Flächen typisch ausgeprägte Merkmale auf. Direkte Reflexionsflächen sind in der Regel sehr kompakt und haben oftmals die gleiche Anzahl an Ecken, wie das zugehörige Baumstrukturelement bzw. das zugehörige Projektionsmuster-Segment. Die Begrenzungslinien verlaufen insbesondere bei Beleuchtung durch kleine Projektionsmuster-Segmente in guter Näherung geradlinig. Weiterhin ist der Kontrast zwischen der direkten Reflexionsfläche und dem Hintergrund relativ hoch. Dagegen weisen indirekte Reflexionsflächen eine geringe Kompaktheit auf. Die Begrenzungslinien verlaufen sehr unruhig und es treten oft mehr Eckpunkte auf, als das zugehörige Projektionsmuster-Segment besitzt. Weiterhin ist der Kontrast zwischen indirekter Reflexionsfläche und Hintergrund oft relativ klein. Durch geeignete Methoden der digitalen Bildverarbeitung, welche die unterschiedlichen Merkmalsausprägungen quantifizieren, kann deshalb zwischen direkter und indirekter Reflexion unterschieden werden. Dies gilt sowohl für kleinere untergeordnete Projektionsmuster-Segmente als auch für größere übergeordnete Projektionsmuster-Segmente. Dabei ist es besonders vorteilhaft, wenn die Projektionsmasken derart erstellt werden, dass sich direkte Reflexionsflächen nicht mit indirekten Reflexionsflächen gegenseitig überlappen.

Weiterhin ist es vorteilhaft, wenn das Klassifizieren der ermittelten Teilflächen anhand der geometrischen Form der jeweiligen Form der jeweiligen Teilfläche, des Kontrastes der jeweiligen Teilfläche, der Position der jeweiligen Teilfläche bezogen auf andere Teilflächen und/oder anhand der Epipolargeometrie der mindestens einen Bildaufnahmeeinheit sowie optional des Mustergenerators erfolgt. Dies kann auf zuverlässige Weise rechnergesteuert mit Hilfe geeigneter Software durchgeführt werden.

Eine weitere Methode zur Klassifikation beruht auf der Nutzung von Nachbarschaftsbeziehungen der Baumstrukturelemente bzw. Projektionsmuster-Segmente. Ausgehend von einer direkten Reflexionsfläche eines zugehörigen Baumstrukturelementes bzw. Projektionsmuster-Segments, die vorher durch ein geeignetes Verfahren entsprechend klassifiziert wurde, können in vielen Fällen die zugehörigen Teilflächen der direkt benachbarten Baumstrukturelemente bzw. Projektionsmuster-Segmente klassifiziert werden. Die zugehörigen direkten Reflexionsflächen der direkt benachbarten Baumstrukturelemente bzw. Projektionsmuster-Segmente in den beteiligten Messbildern befinden sich in der Regel direkt benachbart zu der direkten Reflexionsfläche des ausgehenden Baumstrukturelementes bzw. Projektionsmuster-Segmentes. Indirekte Reflexionsflächen liegen dagegen in der Regel räumlich getrennt zu benachbarten Reflexionsflächen. Durch Wiederholen der Anwendung können die Messbilder von mehreren benachbarten Baumstrukturelementen bzw. Projektionsmuster-Segmenten klassifiziert werden. In einigen Fällen kommt es allerdings aufgrund von Abschattungen durch das Objekt bei der Musterprojektion und/oder bei der Aufnahme des Messbildes von dem Objekt zu Hinterschneidungen. In diesen Fällen können benachbarte Baumstrukturelemente bzw. Projektionsmuster-Segmente im Bereich der Abschattung nicht mehr mit diesem Ansatz klassifiziert werden, weil diese zugehörigen direkten Teilbereiche in der Regel im Messbild räumlich getrennt sind. Es ist aber ohne weiteres möglich, mit mehreren verschiedenen räumlich getrennten direkten Reflexionsflächen jeweils getrennt nach diesem Ansatz die Klassifikation durchzuführen.

Sofern die beteiligten Bildaufnahmeeinheiten sowie ggf. der Projektor kalibriert sind, kann die Epipolargeometrie besonders vorteilhaft als Unterscheidungskriterium eingesetzt werden. Im günstigsten Fall ist die innere und äußere Orientierung des Projektors bekannt. Dann kann für jeden Eckpunkt des zugehörigen Projektionsmuster-Segments bzw. Baumstrukturelements, die Epipolarlinie in der jeweiligen Bildaufnahmeeinheit berechnet werden. Bei der direkten Reflexionsfläche liegen deren Eckpunkte genau auf der jeweiligen Epipolarlinie des zugehörigen Eckpunktes des Projektionsmuster-Segmentes bzw. Baumstrukturelements. Die indirekten Reflexionsflächen liegen dagegen mehr oder weniger willkürlich bzgl. der Epipolarlinien. Sofern nur zwei oder mehr beteiligte Bildaufnahmeeinheiten kalibriert sind, kann ebenfalls für eine beliebige Teilfläche der jeweilig zusammen durchgeführten Messung eines Projektionsmuster-Segmentes bzw. Baumstrukturelementes die Epipolargeometrie analog verwendet werden. Allerdings wird in diesem Fall mit den Eckpunkten einer Teilfläche eines Messbildes gestartet und es werden die Epipolarlinien in den zugehörigen Messbildern der weiteren Bildaufnahmeeinheiten bestimmt. Im Gegensatz zur Verwendung des Projektors ist aber für die jeweilige Teilfläche des einen Messbildes nicht zwingend klar, ob es sich um eine direkte oder indirekte Reflexionsfläche handelt. Bei jeweils homologen direkten Reflexionsflächen in zwei zugehörigen Messbildern zweier Bildaufnahmeeinheiten würde jeder Eckpunkt der Reflexionsfläche des Messbildes der zweiten Bildaufnahmeeinheit auf der jeweiligen zugehörigen Epipolarlinie des Eckpunktes der direkten Reflexionsfläche der ersten Bildaufnahmeeinheit liegen.

Das Verfahren kann nun anhand folgender Überlegungen weiter optimiert werden. Das Überschneiden von direkten Reflexionsflächen innerhalb einer Baumstrukturebene bzw. für alle exklusiven Projektionsmuster-Segmente ist theoretisch nicht möglich. Praktisch kann eine Überschneidung nur durch die Systemunschärfe unter anderem resultierend aus der Unvollkommenheit der Projektionsoptik und der Empfangsoptik auftreten. Sie ist für die spätere Auswirkung unschädlich. Folglich dürfen sich direkte Reflexionsbereiche überlappen. Das Überschneiden von indirekten Reflexionsflächen miteinander ist ebenfalls unschädlich. Diese Bildbereiche sollen bezüglich der sie erzeugenden Projektionsmuster-Segmente bzw. Baumstrukturelemente sowieso nicht ausgewertet werden, weil sie zu völlig falschen 3D-Punkten führen. Zur Vermeidung einer solchen grob falschen Auswertung kann ebenfalls das Klassifizierungsergebnis herangezogen werden. Zudem können durch andere Analysen (z. B. Epipolargeometrie, Phasenrichtung etc.) solche Fehler vermieden werden. Eine Überlappung von direkten und indirekten Reflexionsbereichen ist dagegen zwingend zu vermeiden, da dies zu Messfehlern mit direkter Auswirkung auf die ermittelten zugehörigen 3D-Koordinaten führt. Folglich kann die Maskengenerierung so optimiert werden, dass nur eine Überlappung von direkten und indirekten Reflexionsbereichen nicht gestattet ist.

Insbesondere die Kombination des Baumstrukturansatzes, welcher die notwendige Anzahl an durchzuführenden Messungen zur Bestimmung der beleuchteten Teilflächen je definiertem Projektionsmuster-Segment deutlich reduziert, mit der Klassifikation der Teilflächen in direkte und indirekte Reflexionsflächen, um bei der Erstellung der Projektionsmasken nur die Projektionsmuster-Segmente voneinander zu trennen, bei denen direkte und indirekte Reflexionsflächen sich überlappen, führt zu einem sehr leistungsfähigen und schnellen Verfahren. Sowohl die Zeit zur Bestimmung der Projektionsmasken, als auch die Messzeit für die vollständige Erfassung des im Rahmen einer topometrischen Sensorausrichtung beleuchtbaren Bereichs eines Objektes mit einer minimalen Anzahl an Projektionsmasken kann dadurch relativ klein gehalten werden.

Besonders vorteilhaft ist, wenn die Projektionsmasken, welche für die erforderlichen Ausrichtungen eines zur topometrischen Vermessung eingesetzten topometrischen Sensors auf das Objekt erstellt wurden, wiederholt für eine Anzahl von topometrischen Messungen dieses Objektes oder gleichwertiger Objekte angewendet werden. Dabei ist es vorteilhaft, wenn das Verfahren und die zugehörige Vorrichtung im Rahmen einer automatisierten topometrischen Messung eingesetzt werden. Hierbei wird der topometrische Sensor auf einem Handhabungsautomaten, wie beispielsweise einem Industrieroboter, montiert. Der Handhabungsautomat kann so gesteuert werden, dass der topometrische Sensor immer gleichartige Positionen und Ausrichtungen einnimmt. Das zu vermessende Objekt wird an einem definierten Ort und in definierter Ausrichtung bezüglich des topometrischen Sensors auf dem Handhabungsautomaten aufgebaut. Nachfolgend können die verschiedenen Einzelmessungen definiert jeweils durch die Position und Ausrichtung des topometrischen Sensors bezüglich des Objektes eingelernt (geteacht) werden. Für jede Einzelmessung werden nach dem erläuterten Verfahren eine oder mehrere Projektionsmasken ermittelt. Nachfolgend kann dieses Objekt und/oder baugleiche weitere Objekte mit den gleichen eingelernten Positionen und Ausrichtungen vermessen werden, wobei die im ersten Durchlauf ermittelten Projektionsmasken gleichartig angewendet werden, ohne sie nochmalig zu ermitteln. Dadurch werden Messfehler aufgrund von Mehrfachreflexionen vermieden und der Gesamtzeitaufwand hält sich aufgrund der einmaligen vorhergehenden Ermittlung der Projektionsmasken deutlich in Grenzen.

In einigen Fällen tritt das Problem auf, dass das von dem Objekt rückgestreute Mustersignal aufgrund von Fremdlichtquellen durch eine mehr oder weniger konstante Hintergrundstrahlung überlagert wird. Der Einfluss dieser Fremdlichtquellen (z. B. Sonne, Lampe, etc.) auf das in der Bildaufnahmeeinheit empfangene Bild kann durch verschiedene Maßnahmen, wie z. B. dem Einsatz einer lichtstarken Projektionseinheit, die Verwendung von Bandpassfiltern zur Begrenzung des Wellenlängenbereichs, durch optimierte Standortauswahl etc. minimiert werden. Weiterhin wird eine konstante Hintergrundstrahlung bei einigen topometrischen Verfahren bereits im Auswertealgorithmus berücksichtigt. Ein klassisches Beispiel hierfür ist die Streifenprojektion (z. B. 3-Step oder 4-Step) bei der im Rahmen der Demodulation der Phase aus den Streifenbildern ein konstanter Grauwert-Offset berücksichtigt wird.

Um das Verfahren im Hinblick auf Mehrfachreflexion bei konstanter Hintergrundstrahlung weiter zu verbessern sind die Schritte nach Anspruch 10, umfassend die Aufnahme mindestens eines Kalibrier-Messbildes, vorteilhaft.

Es wird somit vorgeschlagen, dass das zur Auswertung genutzte Messbild aus der Differenz des jeweiligen Messbildes, das von einem mit mindestens einem Projektionsmuster-Segment beleuchteten Objekt aufgenommen wurde, und dem mindestens einen Kalibrier-Messbildes des unbeleuchteten Objektes durchgeführt wird. Die topometrische Vermessung des Objektes wird letztendlich damit durch Auswertung mindestens eines modifizierten Messbildes und nicht anhand des direkt von der mindestens einen Bildaufnahmeeinheit aufgenommenen mindestens einen Messbildes durchgeführt.

Durch die Differenzbildung zur Ermittlung eines modifizierten Messbildes wird die konstante Hintergrundstrahlung aus dem Messbild eliminiert.

Die Erfindung wird nachfolgend anhand eines Ausführungsbeispiels mit den beigefügten Zeichnungen näher erläutert. Es zeigen:
- Figur 1: - Skizze einer Vorrichtung zum dreidimensionalen optischen Vermessen von Objekten mit einem topometrischen Sensor und einer zur Vermeidung von Messfehlern aufgrund von Mehrfach-Reflexionen eingerichteten Steuerungs- und Auswerteeinheit;
- Figur 2a) bis i): - Skizze des Ablaufs einer Ausführungsform des Verfahrens zum dreidimensionalen optischen Vermessen eines Objektes;
- Figur 3: - Beispielhafte Auswertetabelle als Ergebnis der Auswertung der modifizierten Messbilder aller jeweils exklusiv das Objekt beleuchtenden Projektionsmuster-Segmente hinsichtlich der Überlappung von Teilflächen;
- Figur 4a) bis c): - Skizze der Aufteilung einer Produktionsmusterfläche eines Mustergenerators in übergeordnete und untergeordnete Projektionsmuster-Segmente;
- Figur 5a) bis d): - Skizze des Ablaufs einer zweiten Ausführungsform des Verfahrens zum dreidimensionalen optischen Vermessen von Objekten mit übergeordneten und untergeordneten Projektionsmuster-Segmenten unter Verwendung von mehreren Baumstrukturebenen;
- Figur 6: - Beispielhafte Auswertetabelle als Ergebnis der Auswertung der modifizierten Messbilder aller jeweils exklusiv das Objekt beleuchtenden Baumstrukturelemente der ersten und zweiten Ebene hinsichtlich der Überlappung von Teilflächen;
- Figur 7: - Darstellung eines modifizierten Messbildes für das Segment A3 mit den zugehörigen Epipolarlinien;
- Figur 8: - modifiziertes Messbild für das Segment A3 und A4 mit den zugehörigen Epipolarlinien;
- Figur 9: - beispielhafte Auswertetabelle als Ergebnis der Auswertung der direkten Reflexionsflächen des modifizierten Messbildes für die einzelnen Projektionsmuster-Segmente und deren Überschneidungen mit indirekten Reflexionsflächen anderer Projektionsmuster-Segmente.

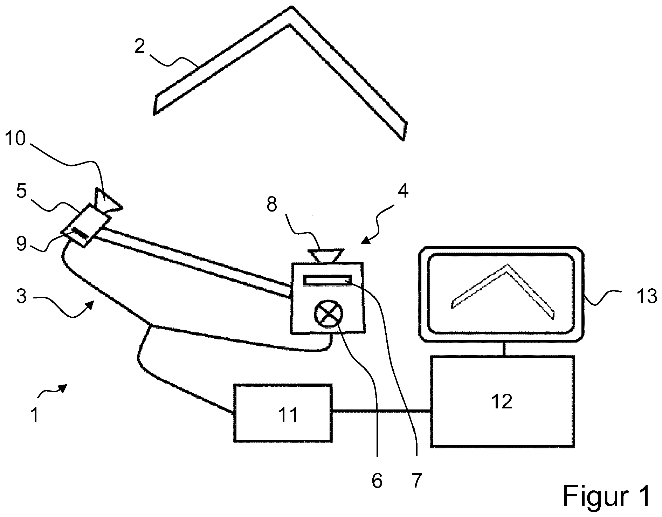

Figur 1 lässt eine Skizze einer Vorrichtung 1 zum dreidimensionalen optischen Vermessen von Objekten 2 mit einem topometrischen Sensor 3 zur Vermeidung von Messfehlern aufgrund von Mehrfachreflexionen erkennen. Der topometrische Sensor 3 umfasst eine Projektionseinheit 4 sowie mindestens eine Bildaufnahmeeinheit 5. Die Projektionseinheit 4 hat eine Lichtquelle 6, einen programmierbaren Mustergenerator 7 mit getrennt ansteuerbaren Einzelelementen sowie eine Projektionsoptik 8. Der topometrische Sensor 3 umfasst ferner mindestens eine Bildaufnahmeeinheit 5, welche ein bildgebendes Element 9 und eine Empfangsoptik 10 aufweist. Der topometrische Sensor 3 ist mit einer Steuerungseinheit 11 verbunden. Diese ist so eingerichtet, dass der topometrische Sensor 3 Messungen durchführen kann, bei denen der Mustergenerator 7 der Projektionseinheit 4 ein bestimmtes Muster projiziert. Insbesondere können Muster projiziert werden, bei denen nur ein oder mehrere Projektionsmuster-Segmente des Mustergenerators 7 das zu vermessende Objekt 2 beleuchten. Ein Projektionsmuster-Segment ist jeweils ein ausgewähltes Einzelelement oder eine zusammenhängende Gruppe benachbarter Einzelelemente des bildgebenden Elementes.

Die Steuerungseinheit 11 ist mit einer Auswerteeinheit 12 verbunden. Weiterhin ist eine Anzeigeeinheit 13 vorgesehen, die zumindest mit der Auswerteeinheit 12 verbunden ist und den Benutzer das von der mindestens einen Bildaufnahmeeinheit 5 aufgenommene Messbild 16 oder ein modifiziertes Messbild 17 anzeigt.

Die Auswerteeinheit 12 analysiert die durch die mindestens eine Bildaufnahmeeinheit 5 aufgenommenen Messbilder, um die Teilflächen zu ermitteln, die durch direkte oder indirekte Reflexion des Musters entstanden sind, wobei nur ein oder mehrere Projektionsmuster-Segmente des Mustergenerators 7 das zu vermessende Objekt 2 beleuchten. Die von der Auswerteeinheit 12 analysierten Messbilder 16 können optional modifizierte Messbilder 17 sein, bei denen die von der Bildaufnahmeeinheit 5 aufgenommenen Messbilder um den Einfluss der Hintergrundbeleuchtung modifiziert sind. Die Auswerteeinheit 12 ist eingerichtet, um nach Auswertung aller (u. U. modifizierten) Messbilder mindestens eine Projektionsmaske zu erstellen. Die Auswerteeinheit 12 ist vorzugsweise hierzu geeignet mit einem Computerprogramm die notwendigen Datenverarbeitungsschritte durchzuführen.

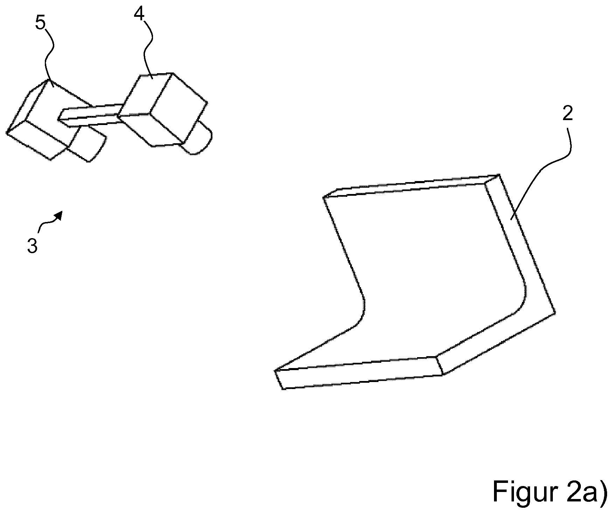

Die Figuren 2a) bis 2i) illustrieren das erste Ausführungsbeispiel des Verfahrens zum dreidimensionalen optischen Vermessen von Objekten mit der Vorrichtung aus Figur 1 anhand eines schematischen Beispiels.

Figur 2a) zeigt eine Aufnahmekonfiguration für eine Messausrichtung des topometrischen Sensors 3 auf das Objekt 2. Das Objekt 2 soll durch den topometrischen Sensor 3, der eine Projektionseinheit 4 sowie eine Bildaufnahmeeinheit 5 umfasst, so vermessen werden, dass keine Messfehler aufgrund von Mehrfachreflexionen auftreten. Die Projektionseinheit 4 enthält hierzu einen programmierbaren Mustergenerator 7 mit getrennt ansteuerbaren Einzelelementen. Ein solcher programmierbarer Mustergenerator 7 kann beispielsweise ein Digital-Micromirror-Device DMD, ein Flüssigkristalldisplay LCD oder ein Flüssigkristall auf einem Siliziumsubstrat LCoS umfassen.

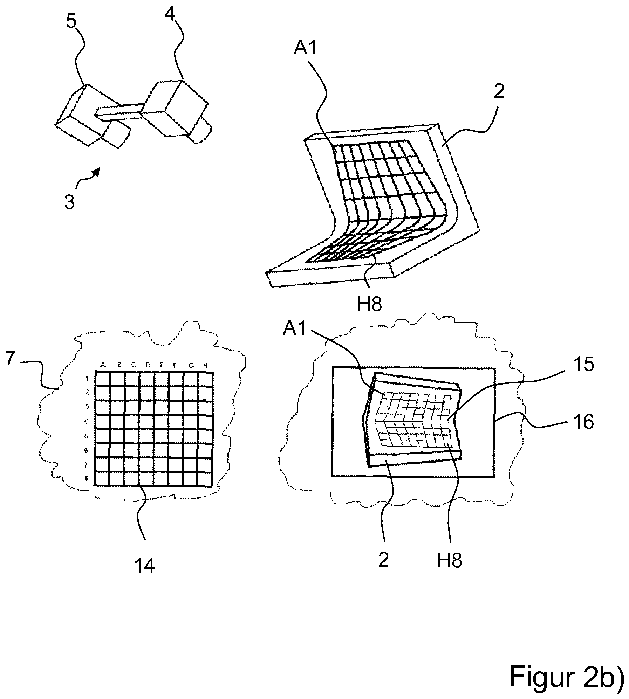

Figur 2b) lässt eine Skizze des Messaufbaus aus Figur 2a) mit einer Definition der Projektionsmuster-Segmente 14 des programmierbaren Mustergenerators 7 und der Projektion der Projektionsmuster-Segmente 14 auf das Objekt 2 erkennen. Zum besseren Verständnis werden die aufgenommenen Segmentgrenzen auf dem Objekt 2 dargestellt. Von der mindestens einen Bildaufnahmeeinheit 5 wird dann ein entsprechendes Messbild 16 von dem Objekt 2 mit den entsprechend der Projektionsmuster-Segmente 14 beleuchteten Teilflächen 15 aufgenommen.

Die Projektionsmuster-Segmente 14 umfassen eine definierte Anzahl (1, 2, ...., n) von exklusiv ansteuerbaren Einzelelementen des Mustergenerators 7. Im illustrierten Beispiel umfasst der Mustergenerator 7 eine Anzahl von 64 quadratischen Segmenten, die in einer Matrix mit den Zeilennummern 1 bis 8 und in Spaltennummern A bis H angeordnet sind. Ein Segment besteht in diesem Ausführungsbeispiel aus 25 (5x5) Einzelsegmenten des Mustergenerators 7. Dieser besitzt somit 64x25=1600 Einzelelemente. In der Figur 2b werden aus Gründen der besseren Anschaulichkeit nicht die Einzelelemente dargestellt, sondern nur die Projektionsmuster-Segmente 14.

In Figur 2b) sind die Umrisse der definierten Projektionsmuster-Segmente 14 auf das Objekt 2 projiziert. Erkennbar ist in Figur 2b) unten links die zweidimensionale Darstellung des Mustergenerators 7 mit den 64 definierten Projektionsmuster-Segmenten 14. Jedes Segment ist durch eine Zeilen- und Spaltennummerierung (z. B. A1, B1, ... H8) eindeutig gekennzeichnet. Ferner zeigt Figur 2b) unten rechts das zugehörige Messbild 16, welches mit dem bildgebenden Element 9 der Bildaufnahmeeinheit 5 von dieser Konfiguration aufgenommen wird. Auch hier sind im Messbild 16 zum besseren Verständnis die aufgenommenen Segmentgrenzen der Projektionsmuster-Segmente 14 auf dem Objekt 2 dargestellt.

Für jedes Projektionsmuster-Segment 14 wird nun jeweils ein Messbild 16 durch die Bildaufnahmeeinheit 5 aufgenommen, bei dem das jeweilig zugehörige Projektionsmuster-Segment 14 des programmierbaren Mustergenerators 7 das Objekt 2 exklusiv beleuchtet.

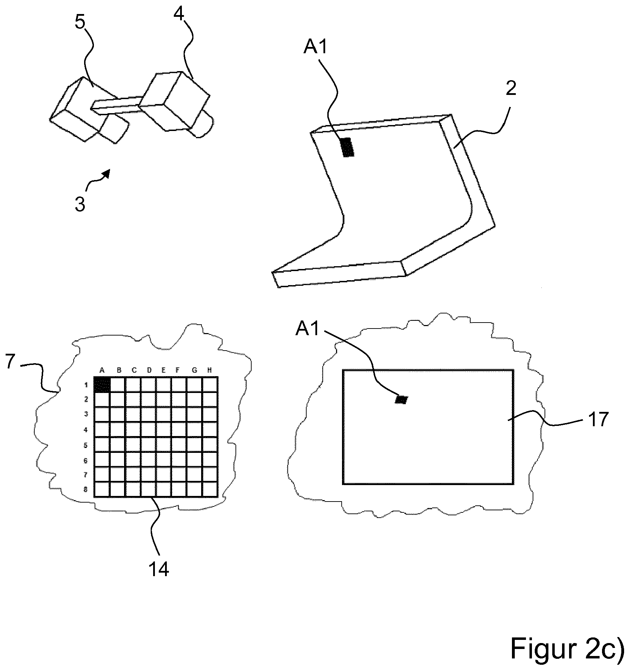

In den Figuren 2c), 2d), 2e) und 2f) ist dieser Vorgang der Beleuchtung des Objektes sequentiell hintereinander durch die einzelnen Projektionsmuster-Segmente (14) exemplarisch für die Segmente A1, A3, A4 und A5 skizziert.

Weiterhin wird einmal ein Kalibrier-Messbild von dem Objekt 2 durch die Bildaufnahmeeinheit 5 aufgenommen, bei dem das Objekt 2 nicht durch die Projektionseinheit 4 beleuchtet ist. Das Kalibrier-Messbild beinhaltet somit die Information über den Einfluss einer konstanten Hintergrundbeleuchtung, die auch bei den späteren Messungen mit Beleuchtung durch ausgewählte Projektionsmuster-Segmente 14 auftritt. Dieses Kalibrier-Messbild wird zur Berechnung eines für die spätere Auswertung genutzten modifizierten Messbildes 17 genutzt, indem von jedem Messbild 16 für ein bestimmtes Projektionsmuster-Segment 14 das Kalibrier-Messbild ohne Beleuchtung durch die Projektionseinheit 4 abgezogen wird. Damit wird der Einfluss der Hintergrundbeleuchtung (unter Vernachlässigung von Helligkeitsänderung sowie Rauschen) rechnerisch beseitigt.

In den Figuren 2c), 2d), 2e) und 2f) sind die jeweils durch die Differenzbildung, d. h. durch Subtraktion entstandenen modifizierten Messbilder 17 der Projektionsmuster-Segmente A1, A3, A4 und A5 abgebildet. Es werden dann in allen modifizierten Messbildern 17 die reflektierten Teilflächen 15 ermittelt. Die Detektion dieser Teilflächen 15 kann z. B. durch die Anwendung eines Grauwert-Schwellwertes erfolgen. Alle Pixel des (ggf. modifizierten) Messbildes 16 (17) oberhalb eines a priori definierten Schwellwertes werden als Teilflächen erkannt.

Aus Figur 2c) ist erkennbar, dass im Falle des Projektionsmuster-Segmentes A1 genau eine Teilfläche A1-1 detektiert wird. Aufgrund von Doppelreflexion werden für die Projektionsmuster-Segmente A3, A4 und A5 jeweils zwei Teilflächen (A3-1, A3-2), (A4-1, A4-2), (A5-1, A5-2) bestimmt.

Für die Durchführung des Verfahrens in der der einfachsten Ausführungsform spielt es dabei keine Rolle, ob es sich bei der jeweiligen Teilfläche 15 um eine direkte oder indirekte Reflexionsfläche handelt.

Nach Aktivierung aller Projektionsmuster-Segmente 14 (A1 bis H8) hintereinander und Aufnahme der zugehörigen Messbilder 16 werden von der Auswerteeinheit 12 durch geeignete Programmierung alle möglichen Kombinationen von jeweils zwei (ggf. modifizierten) Messbildern analysiert. Für jede Kombination wird geprüft, ob sich die jeweiligen Teilflächen 15 in den identischen Bildbereichen überlappen. Sofern eine Überlappung vorliegt, dürfen die beiden zugehörigen Projektionsmuster-Segmente 14 nicht gleichzeitig das Objekt 2 beleuchten, da es dann zu einer Überlagerung der projizierten Teilmuster der beiden Projektionsmuster-Segmente 14 in der Bildaufnahmeeinheit 5 kommen kann. Umfassen die beiden (ggf. modifizierten) Messbilder keine gemeinsamen Teilflächen 15, so können die beiden zugehörigen Projektionsmuster-Segmente 14 gemeinsam das Objekt 2 beleuchten, da in der Bildaufnahmeeinheit 5 keine Überlagerung der Teilmuster erfolgt.

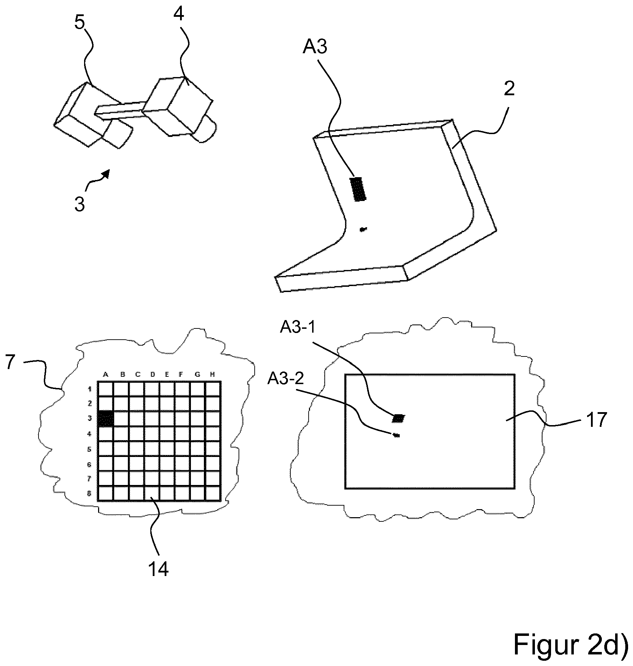

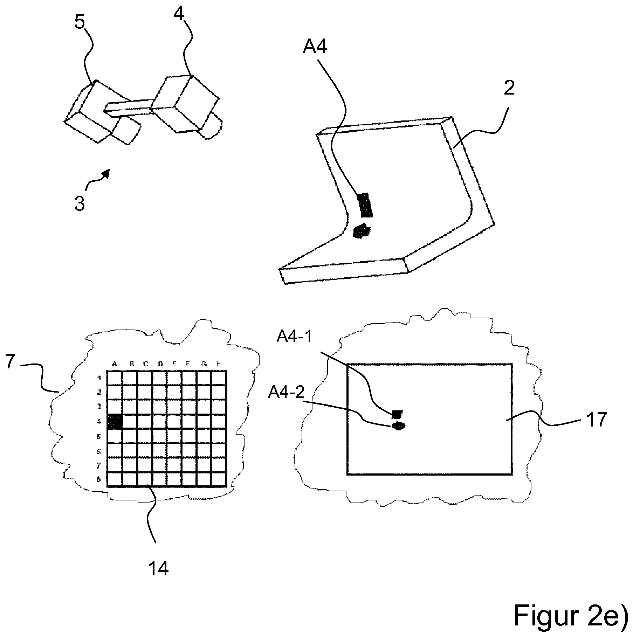

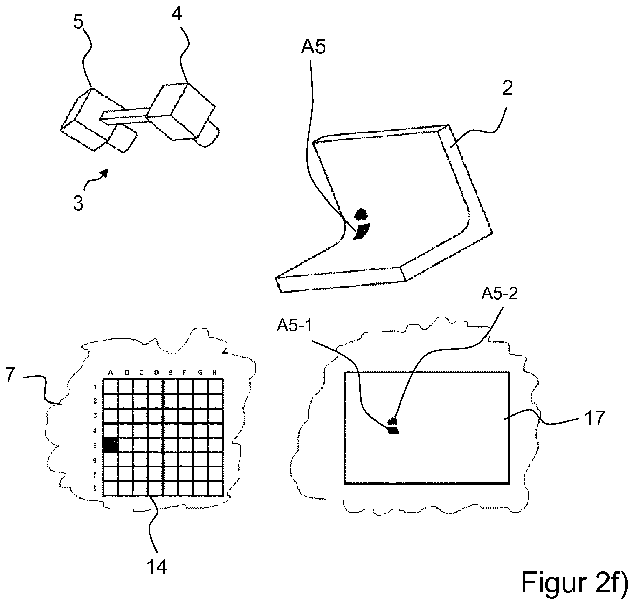

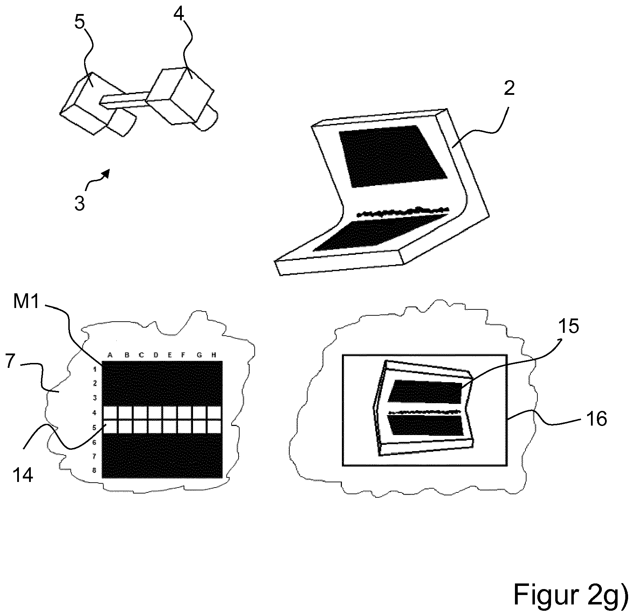

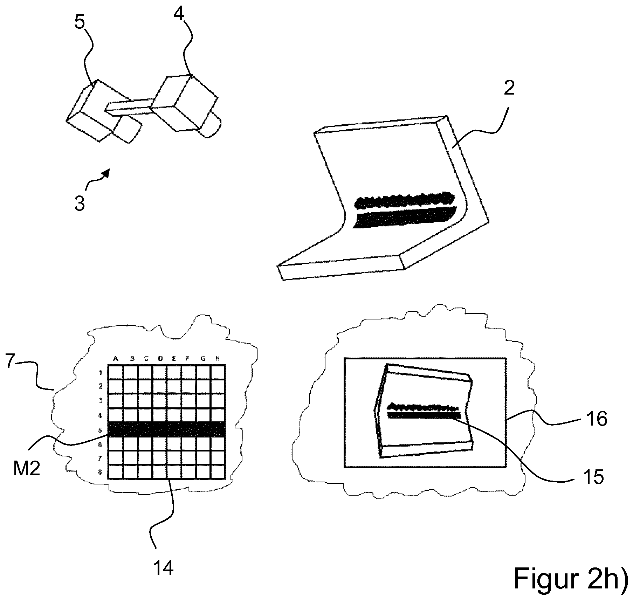

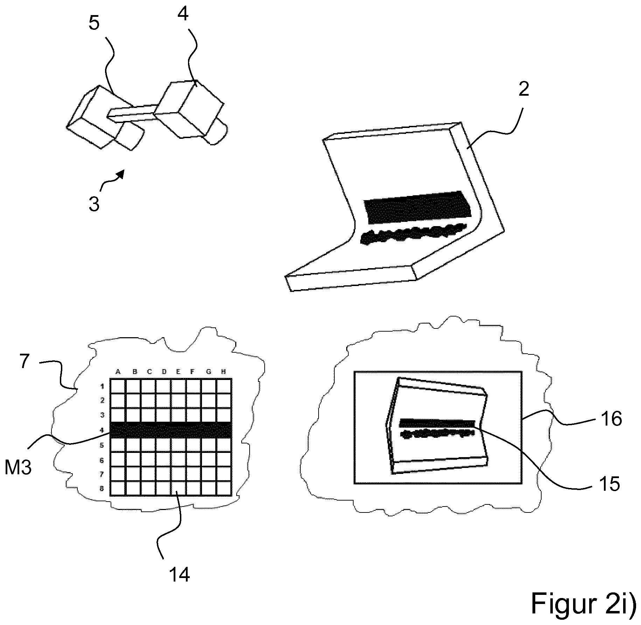

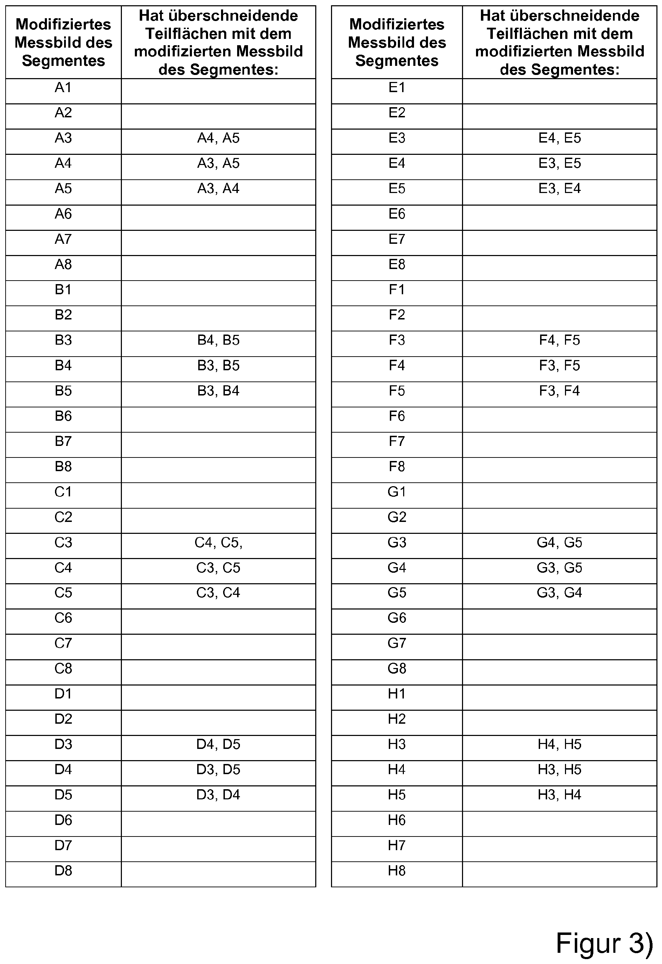

Für das Beispiel aus Figur 2 sind die Ergebnisse der Überschneidungsanalyse der (ggfs. modifizierten) Messbilder in Figur 3 aufgelistet. Hier ist für jedes Projektionsmuster-Segment A1 bis H8 aufgelistet, ob bei der Projektion mit diesen Projektionsmuster-Segment A1 bis H8 überschneidende Teilflächen 15 mit dem (ggf. modifizierten) Messbild anderer Projektionsmuster-Segmente auftreten. So wird z. B. für das Projektionsmuster-Segment A3 festgestellt, dass dessen Teilflächen auch die den Projektionsmuster-Segmenten A4 und A5 zugeordneten Teilflächen 15 im aufgenommenen (ggf. modifizierten) Messbild überlagern.

Es ist aber auch erkennbar, dass für viele Projektionsmuster-Segmente, wie z. B. A1, A2, A6 bis B2, B6 bis C2 etc. die im (ggf. modifizierten) Messbild enthaltenen Teilflächen 15 keine Überschneidungen mit Teilflächen 15 eines anderen (modifizierten) Messbildes aufweisen. Sie können also problemlos gemeinsam das Objekt 2 beleuchten, da es in der Bildaufnahmeeinheit 5 nicht zu einer Überlagerung der Mustersignale kommt. Die Projektionsmuster-Segmente der Reihen 3, 4 und 5, welche die abgerundete Kante des Objektes 2 bzw. die direkte Umgebung beleuchten, umfassen gemeinsam beleuchtete Teilflächen 15, in diversen (modifizierten) Messbilderpaaren.

Auf Grundlage der modifizierten Messbilder 17 können nachfolgend eine oder mehrere Projektionsmasken, welche jeweils eine oder mehrere Projektionsmuster-Segmente 14 des programmierbaren Mustergenerators 7 umfassen, erstellt werden, jede Projektionsmaske ist dabei so ausgestaltet, dass die zugehörigen beleuchteten Teilflächen 15 je (modifiziertem) Messbild 16 (17) sich nicht gegenseitig überlappen. Abgesehen von dieser "Überlappungsbedingung" können die Projektionsmasken aber prinzipiell völlig beliebig festgelegt werden. In der Praxis empfiehlt es sich jedoch, möglichst wenige kompakte Projektionsmasken zu erzeugen. Zum einen wird auf diese Weise die Gesamtmesszeit möglichst klein gehalten. Zum anderen bewirkt die gemeinsame Beleuchtung des Objektes 2 durch benachbarte Projektionsmuster-Segmente 14 ein besseres Signal-Rausch-Verhältnis im Falle von Unschärfe, wie sie z. B. durch die Tiefpasswirkung der Projektionsoptik sowie der Empfangsoptik in der Praxis nahezu immer auftritt.

Generell ist es vorteilhaft, wenn die Auswerteeinheit durch geeignete Programmierung eingerichtet ist, um in der ersten Projektionsmaske alle die Projektionsmuster-Segmente 14 aufzunehmen, deren (modifizierte) Messbilder keine gemeinsamen Teilflächen 15 mit anderen (modifizierten) Messbildern aufweisen. Anschließend ist es ratsam, die anderen Projektionsmuster-Segmente 14, welche nicht gemeinsam mit anderen Projektionsmuster-Segmenten 14 projiziert werden dürfen, hinsichtlich ihrer möglichen Zuordnung zur ersten Projektionsmaske zu testen. Sofern das jeweilig potentiell hinzuzufügende Projektionsmuster-Segment 14 keine überschneidende Teilflächen 15 mit einem der bisherigen Projektionsmuster-Segmente 14 der jeweiligen Projektionsmaske in den zugehörigen (modifizierten) Messbildern 16 (17) hat, kann dieses Projektionsmuster-Segment 14 dieser Projektionsmaske hinzugefügt werden. Für die optional folgenden Projektionsmasken kann sehr ähnlich vorgegangen werden. Allerdings sollte hier mit einem Projektionsmuster-Segment 14 gestartet werden, welches bisher noch nicht in den vorherigen Projektionsmasken enthalten war. Dabei ist es ohne weiteres möglich, dass bestimmte Projektionsmuster-Segmente 14 in mehreren Projektionsmasken auftreten. Das betrifft insbesondere die Projektionsmuster-Segmente 14, deren (modifizierte) Messbilder keine gemeinsamen Teilflächen 15 mit anderen (modifizierten) Messbildern aufweisen, da sie niemals andere Musterbereiche beeinflussen.

Entsprechend der oben skizzierten Herangehensweise werden die Projektionsmasken für das Ausführungsbeispiel aus Figuren 2a) bis 2f) ermittelt. Ausgehend von der Auswertetabelle in Figur 3 sind mindestens drei Projektionsmasken notwendig, um alle im Rahmen dieser einen Messausrichtung erfassbaren Objektbereiche ohne den Einfluss von Mehrfachreflexionen fehlerfrei zu messen. Eine mögliche vorteilhafte Ausgestaltung dieser drei Projektionsmasken sind jeweils in den Figuren 2g), 2h) und 2i) illustriert.

Die erste Projektionsmaske M1 umfasst dabei alle Projektionsmuster-Segmente 14, deren (modifizierte) Messbilder 16 (17) keine gemeinsamen Teilflächen 15 mit anderen (modifizierten) Messbildern 16 (17) aufweisen.

Sodann werden die anderen Projektionsmuster-Segmente 14, d. h. die Segmente in den Zeilen 4 und 5 in dem Ausführungsbeispiel, welche nicht gemeinsam mit anderen Projektionsmuster-Segment 14 projiziert werden dürfen, hinsichtlich ihrer möglichen Zuordnung zur ersten Projektionsmaske M1 getestet.

Die Messung der Projektionsmuster-Segmente A3, B3, C3, D3, E3, F3, G3 und H3 haben keine gemeinsamen Teilflächen 15 mit den Projektionsmuster-Segmenten der bisherigen ersten Projektionsmaske M1. Sie werden deshalb der ersten Projektionsmaske M1 hinzugefügt.

Weitere Projektionsmuster-Segmente 14 können nicht mehr zur ersten Projektionsmaske M1 aufgenommen werden, da jedes dieser Projektionsmuster-Segmente 14 der verbleibenden Zeilen 4 und 5 mindestens eine Überschneidung der zugehörigen Teilflächen 15 in dem jeweiligen (modifizierten) Messbild zu den Teilflächen 15 der Projektionsmuster-Segmente 14 der bestehenden Projektionsmaske M1 aufweist.

Alternativ zum Zufügen der Projektionsmuster-Segmente A3, B3, C3, D3, E3, F3, G3 und H3 hätten stattdessen auch andere Projektionsmuster-Segmente 14 hinzugefügt werden können. Eine alternative sinnvolle Erweiterung der Projektionsmaske M1 wäre z. B. die Hinzunahme der Projektionsmuster-Segmente A5, B5, C5, D5, E5, F5, G5 und H5. Auch in diesem Fall würde die Projektionsmaske M1 aus zwei kompakten, vollständig gefüllten Teilmasken bestehen.

Eine andere mögliche Erweiterung, wie z. B. die Zunahme der Projektionsmuster-Segment A4, B4, C4, D4, E4, F4, G4 und H4 ist dagegen nicht empfehlenswert, da in diesem Fall die Projektionsmaske M1 aus drei Teilmasken bestehen würde. Prinzipiell lassen sich auch weitere, nicht empfehlenswerte Kombinationen bilden, wie z. B. die Hinzunahme der Projektionsmuster-Segmente A5, B4, C3, D4, E5, F4, G3 und H5 in die erste Projektionsmaske M1.

Die Bildung der Projektionsmaske M1 sollte dahin optimiert werden, dass diese Projektionsmaske aus wenigen kompakten, vollständig gefüllten Teilmasken besteht.

Figur 2h) zeigt die nachfolgende Messung mit der zweiten Projektionsmaske M2, welche die Segmente A5, B5, C5, D5, E5, F5, G5 und H5 umfasst. Wie bereits erläutert, könnte diese zweite Projektionsmaske M2 in diesem Fall um alle Projektionsmuster-Segmente 14 erweitert werden, die in ihren zugehörigen (modifizierten) Messbildern 16 (17) keine überschneidenden Teilflächen 15 mit andere (modifizierten) Messbildern 16 (17) haben. Aus Gründen der Übersichtlichkeit wird an dieser Stelle aber darauf verzichtet.

Die in Figur 2i) gezeigte dritte Projektionsmaske M3 umfasst dann die übrig bleibenden Projektionsmuster-Segmente A4, B4, C4, D4, E4, F4, G4 und H4. Analog zur zweiten Projektionsmaske M2 könnten auch hier die Projektionsmuster-Segmente 14 ohne Überschneiden der Teilflächen 15 in den zugehörigen (modifizierten) Messbildern 16 (17) der dritten Projektionsmaske M3 hinzugefügt werden. Nach Berechnung der Projektionsmasken M1 bis M3 wird die topometrische Messung des Objektes 2 getrennt für jede Projektionsmaske M1 bis M3 durchgeführt. Im vorliegenden Beispiel wird eine Vielzahl von Streifenbildern auf das Objekt 2 projiziert. Dabei werden die Streifen nur durch die Projektionsmuster-Segmente 14 auf das Objekt 2 projiziert, die zur jeweiligen Projektionsmaske M1 bis M3 gehören. Parallel zu jedem projizierten Streifenbild unter Anwendung der jeweiligen Projektionsmaske M1 bis M3 wird jeweils ein Messbild 16 durch die Bildaufnahmeeinheit 5 aufgenommen. Nachfolgend werden die Messbilder 16 ausgewertet und durch Vorwärtsschnitt die 3D-Koordinaten des Objektes 2 ohne den fehlerhaften Einfluss von Mehrfachreflexionen auf die ermittelten Bildkoordinaten in der Bildaufnahmeeinheit 5 berechnet. Die Verfahren der Auswertung von Messbildern 16 zur dreidimensionalen optischen Vermessung z. B. durch Vorwärtsschnitt sind hinlänglich bekannt und als Softwareprogramme zur Ausführung auf einer Datenverarbeitungsanlage verfügbar. Es ist dabei anzumerken, dass im Rahmen des aktuellen Ausführungsbeispiels die Auswertung durch die Auswerteeinheit 12 durchgeführt wird.

Nachfolgend wird eine weitere Ausführungsform beschrieben, die auf einer hierarchischen Struktur mit Hilfe eines oder mehrerer übergeordneten Baumstrukturebenen beruht, zu der einzelne untergeordnete Projektionsmuster-Segmente 14 zusammengefasst werden.

Das Ausführungsbeispiel verwendet das Quad-Tree-Verfahren, bei dem drei Baumstrukturebenen (=Hierarchieebenen) festgelegt werden.

Ausgehend von der Gesamtheit aller Elemente des Mustergenerators 7, bzw. ausgehend von der Matrix der kleinsten Projektionsmuster-Segmente 14, werden diese in vier gleichgroße Quadranten unterteilt.

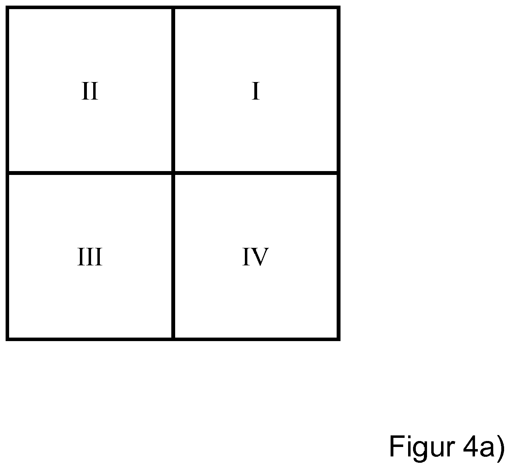

Figur 4a) lässt erkennen, dass die Fläche des Mustergenerators 7 in die vier Quadranten I, II, III und IV unterteilt sind. Die Bezeichnung orientiert sich dabei an der mathematischen Nomenklatur der vier Quadranten eines zweidimensionalen, euklidischen Koordinatensystems.

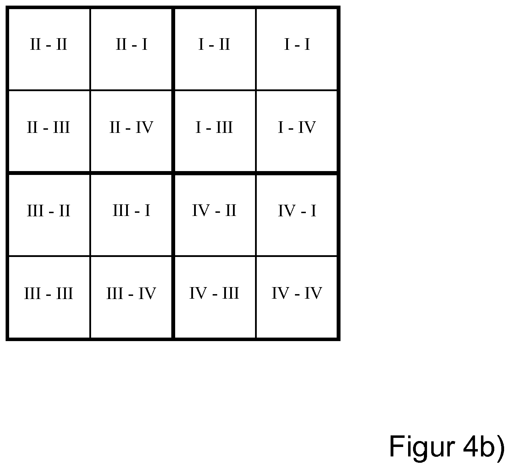

Aus Figur 4b) ist erkennbar, dass jeder Quadrant I bis IV nachfolgend wiederum in vier gleichgroße Unterquadranten nach dem gleichen Prinzip zergliedert wird. Die zweite Baumstrukturebene umfasst somit 16 Elemente I-I bis IV-IV, wobei die erste Quadranten-Bezeichnung der Quadrantenpaare den Quadrant der übergeordneten Baumstrukturebene aus Figur 4a) und die nachfolgende Quadrantenbezeichnung den jeweiligen Unterquadranten bezeichnet.

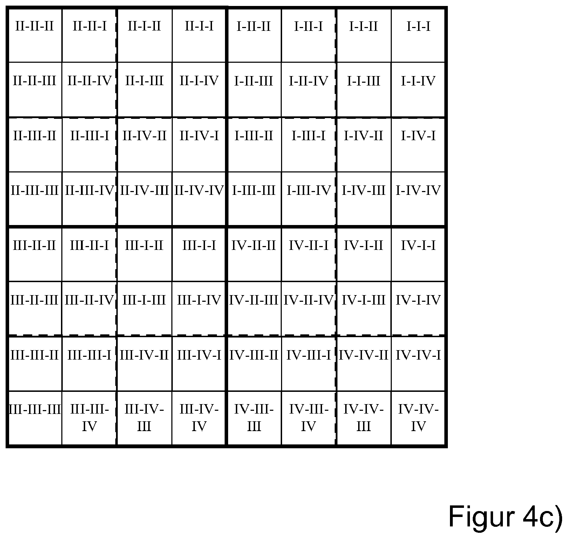

Jedes Element der zweiten Baumstrukturebene wird nochmals analog in vier Quadranten zerlegt. Dies ist in Figur 4c) erkennbar. Die Elemente der dritten Baumstrukturebene sind damit identisch mit den a priori definierten Projektionsmuster-Segmenten 14 aus dem oben beschriebenen Ausführungsbeispiel.

Die einzelnen Elemente werden somit durch drei aufeinanderfolgende Quadranten-Bezeichnungen deklariert, wobei die erste Quadranten-Bezeichnung den Quadrant in der ersten Baumstrukturebene gemäß Figur 4a), die mittlere Quadranten-Bezeichnung den Quadranten in der zweiten Baumstrukturebene gemäß Figur 4b) und die letzte Quadranten-Bezeichnung den Unter-UnterQuadranten in der dritten Baumstrukturebene gemäß Figur 4c) kennzeichnet.

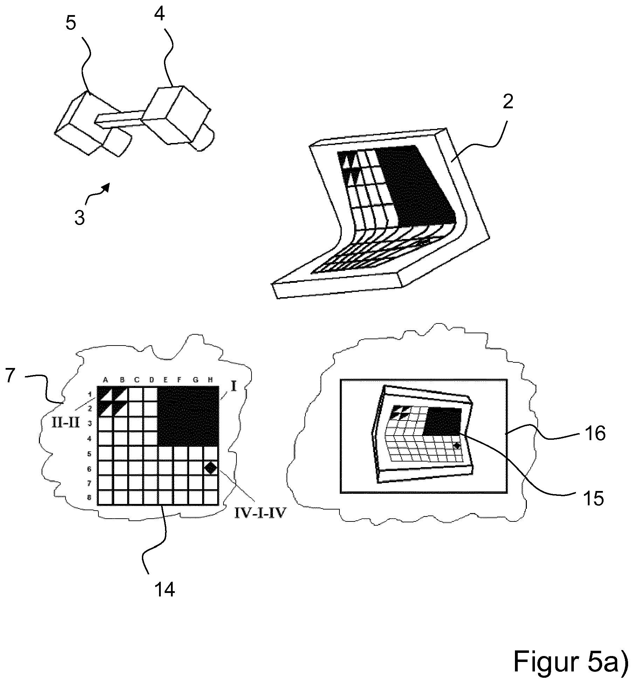

Figur 5a) zeigt beispielhaft die Vorrichtung aus Figur 1 und 2a), bei dem exemplarisch jeweils ein Element der drei definierten Baumstrukturebenen aus Figuren 4a) bis 4c) hervorgehoben ist. Es handelt sich hierbei um das Element I der ersten Baumstrukturebene (gekennzeichnet durch die vollständig geschwärzte Fläche), das Element II-II der zweiten Baumstrukturebene (gekennzeichnet durch die geschwärzten Dreiecke) und das Element IV-I-IV der dritten Baumstrukturebene (gekennzeichnet durch die geschwärzte Raute).

Das Verfahren lässt sich nun wie folgt optimieren. Zuerst wird ein Kalibrier-Messbild mit der Bildaufnahmeeinheit 5 aufgenommen, bei dem die Projektionseinheit 4 nicht das Objekt 2 beleuchtet, um den Einfluss der Hintergrundstrahlung durch spätere Subtraktion dieses Kalibrier-Messbildes vom jeweilig auszuwertenden Messbild 16 auszuschließen.

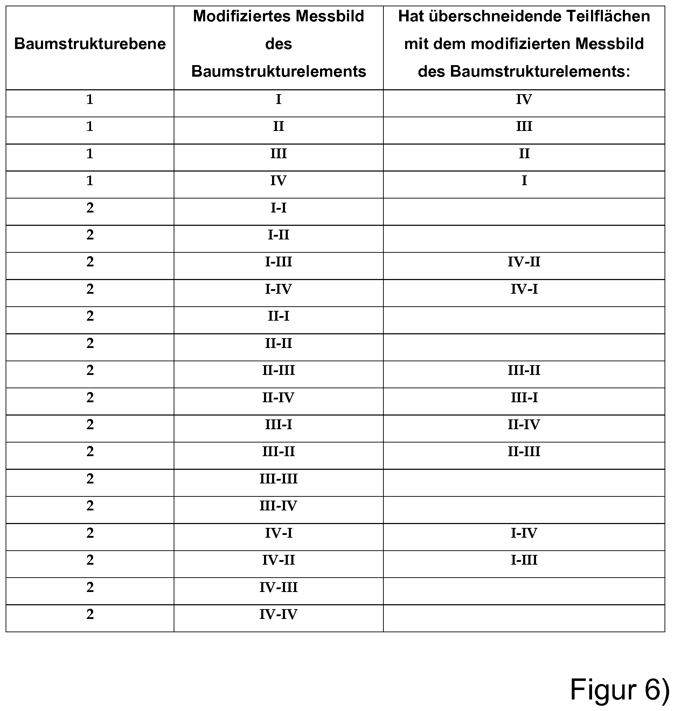

Danach wird nun für jedes Baumstrukturelement der ersten Baumstrukturebene jeweils ein Messbild 16 durch die Bildaufnahmeeinheit 5 aufgenommen, bei dem das jeweilig zugehörige Baumstrukturelement des programmierbaren Mustergenerators 7 das Objekt 2 exklusiv beleuchtet. Nachfolgend werden in allen (ggf. durch Differenzbildung mit dem Kalibriermessbild modifizierten) Messbildern die reflektierten Teilflächen 15 ermittelt. Anschließend werden alle möglichen Kombinationen von jeweils zwei (modifizierten) Messbildern der ersten Baumstrukturebene analysiert. Analog zum beschriebenen Vorgehen des ersten Ausführungsbeispiels wird bei jeder Kombination geprüft, ob die jeweiligen Teilflächen 15 sich in identischen Bildbereichen überlappen. Die Ergebnisse dieser Überlappungsanalyse sind in Figur 6 tabellarisch aufgeführt.

Bei den Baumstrukturelementen für die einzelnen Baumstrukturebenen handelt es sich somit um übergeordnete Projektionsmuster-Segmente 14 im Sinne der vorliegenden Erfindung. Während in dem ersten Ausführungsbeispiel das Verfahren mit gleich großen Projektionsmuster-Segmenten 14 durchgeführt wird, erfolgt das Verfahren gemäß dem zweiten Ausführungsbeispiel mit übergeordneten und untergeordneten Projektionsmuster-Segmenten 14, wobei die übergeordneten Projektionsmuster-Segmente größer als die untergeordneten Projektionsmuster-Segmente sind und untergeordnete Projektionsmuster-Segmente in einer übergeordneten Fläche zusammenfassen.

Aus der Tabelle in Figur 6 ist erkennbar, dass die (modifizierten) Messbilder 16 (17) der übergeordneten Projektionsmuster-Segmente I und IV sowie II und III jeweils gemeinsame Teilflächen 15 aufweisen. Dagegen überschneiden sich die Teilflächen 15 in den (modifizierten) Messbildern 16 (17) der übergeordneten Projektionsmuster-Segmente (Baumstrukturelemente) I und II sowie III und IV nicht. Wenn sich also die Elternteilflächen der Baumstrukturelemente I und II sowie III und IV nicht überschneiden, so gilt das auch für eine beliebige Kombination von jeweils mindestens einem untergeordneten Baumstrukturelement je übergeordnetem Baumstrukturelement. So werden also beispielsweise die Kombinationen I-I und II-II, I-IV und II-III, III-II und IV-I ebenfalls keine gemeinsamen Teilflächen 15 in den zugehörigen Messbildern 16 aufweisen. Anhand der Kenntnis über die Lage und Größe der jeweiligen Elternteilfläche ist ebenfalls klar, welchen maximalen Bereich die Kindteilfläche im (modifizierten) Messbild abdecken kann, nämlich maximal den gleichen Bereich wie die Elternteilfläche.

Ausgehend von den Ergebnissen der Auswertung der (modifizierten) Messbilder 16 (17) der ersten Baumstrukturebene kann die Anzahl der notwendigen Messungen der zweiten Stufe reduziert werden. Da sich die Teilflächen 15 der (modifizierten) Messbilder für die Baumstrukturelemente I und II sowie III und IV - wie erläutert - nicht überschneiden und die Position und die maximale Größe beliebiger Teilflächen 15 für Baumstrukturelemente der zweiten Ebene bekannt sind, können jeweils zwei Baumstrukturelemente der zweiten Ebene für die übergeordneten Ebenen I und II sowie III und IV parallel das Objekt 2 beleuchten. Im praktischen Beispiel beleuchten folgende Elementpaare der zweiten Baumstrukturebene gemeinsam das Objekt 2:
I-I und II-I, I-II und II-II, I-III und II-III, I-IV und II-IV, III-I und IV-I, III-II und IV-II, III-III und IV-III, III-IV und IV-IV.

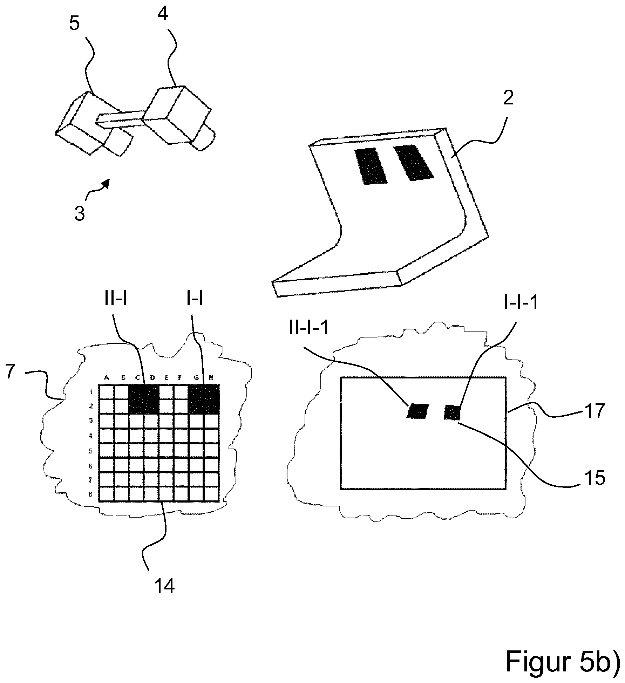

Die 16 originär durchzuführenden Messungen der zweiten Baumstrukturebene können somit auf acht Messungen reduziert werden. Zum besseren Verständnis skizziert Figur 5b) die gemeinsame Beleuchtung des Objektes II mit den (übergeordneten) Projektionsmuster-Segmenten (I-I und II-I). Aufgrund der bekannten Position und Ausdehnung der Teilflächen 15 der zugehörigen höheren Baumstrukturelemente I und II können die beiden detektierten Teilflächen I-I-1 und II-I-1 im (modifizierten) Messbild 16 (17) eindeutig dem jeweiligen Baumstrukturelement I-I bzw. II-I zugeordnet werden.

Anschließend werden analog zur ersten Baumstrukturebene die (modifizierten) Messbilder 16 (17) der zweiten Baumstrukturebene jeweils paarweise hinsichtlich der Überlappung von Teilflächen 15 analysiert.

Wir aus der Tabelle in Figur 6 ersichtlich, überschneiden sich die Teilflächen 15 der jeweils für äußere Projektionsmuster-Segmente (Elemente) der zweiten Baumstrukturebene beider beleuchteter Seiten des Objektes 2 nicht in den (modifizierten) Messbildern 16 (17). Dagegen überschneiden sich aber die Teilflächen 15 der acht zur Kante benachbarten Projektionsmuster-Segmente 14 der zweiten Baumstrukturebene in den (modifizierten) Messbildern 16 (17). Ausgehend von den Ergebnissen der Überlappungen der Teilflächen 15 der zweiten Baumstrukturebene in den (modifizierten) Messbildern 16 (17) können die originär 64 Messungen der dritten Baumstrukturebene wiederum deutlich verringert werden. So kann jeweils eine Kindteilfläche der acht sich nicht gegenseitig überlappenden, äußeren Elemente der zweiten Baumstrukturebene gemeinsam das Objekt 2 beleuchten. Zusätzlich kann noch jeweils eine Kindteilfläche der inneren vier Elemente der zweiten Baumstrukturebene an einer Seite des Objekts 2 zusätzlich das Objekt 2 beleuchten, da ihre zugehörigen Teilflächen 15 in den (modifizierten) Messbildern 16 (17) keine Überschneidungen mit den zugehörigen Teilflächen 15 der äußeren acht Elemente der zweiten Baumstrukturebene aufweisen. Dadurch ergeben sich also vier kombinierte Messungen wie folgt:
Messung 1: I-I-I, I-II-I, II-I-I, II-II-I, I-IV-I, I-III-I, II-IV-I, II-III-I, IV-IV-I, IV-III-I, III-IV-I, III-III-I
Messung 2: I-I-II, I-II-II, II-I-II, II-II-II, I-IV-II, I-III-II, II-IV-II, II-III-II, IV-IV-II, IV-III-II, III-IV-II, III-III-II
Messung 3: I-I-III, I-II-III, II-I-III, II-II-III, I-IV-III, I-III-III, II-IV-III, II-III-III, IV-IV-III, IV-III-III, III-IV-III, III-III-III
Messung 4: I-I-IV, I-II-IV, II-I-IV, II-II-IV, I-IV-IV, I-III-IV, II-IV-IV, II-III-IV, IV-IV-IV, IV-III-IV, III-IV-IV, III-III-IV

Pro Messung beleuchten also 12 Elemente der dritten Baumstrukturebene parallel das Objekt 2. Die verbleibenden 16 Elemente der dritten Baumstrukturebene können in vier Messungen ä vier Elemente gegliedert werden. Die Teilflächen 15 in den (modifizierten) Messbildern 16 (17) der betreffenden Elemente der zweiten Baumstrukturebene IV-I, IV-II, III-I und III-II überlappen sich nicht. Somit kann wiederum eine beliebige Kombination von jeweils einem Element der dritten Baumstrukturebene pro genanntes Element der zweiten Baumstrukturebene zusammen projiziert werden. Für das praktische Beispiel wurden folgende Kombinationen gebildet.
Messung 5: IV-I-I, IV-II-I, III-I-I, III-II-I
Messung 6: IV-I-II, IV-II-II, III-I-II, III-II-II
Messung 7: IV-I-III, IV-II-III, III-I-III, III-II-III
Messung 8: IV-I-IV, IV-II-IV, III-I-IV, III-II-IV

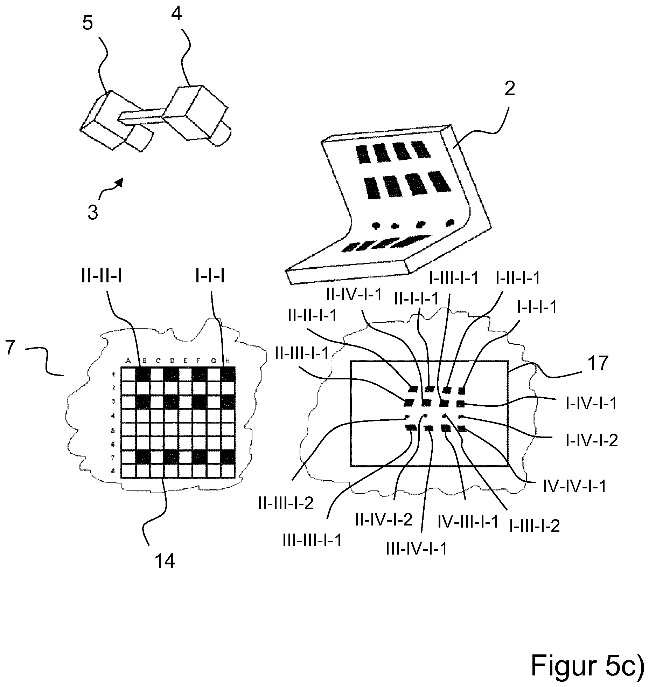

Die Messungen 1 und 5 werden zum besseren Verständnis in Figuren 5c) und 5d) dargestellt.

Aus Figur 5c) wird deutlich, dass die Projektionsmuster-Segmente I-IV-I, I-III-I, II-IV-I und II-III-I jeweils zwei Teilflächen beleuchten, wobei die mit dem Zusatz "zwei" bezeichneten Teilflächen von Mehrfachreflexionen herrühren.

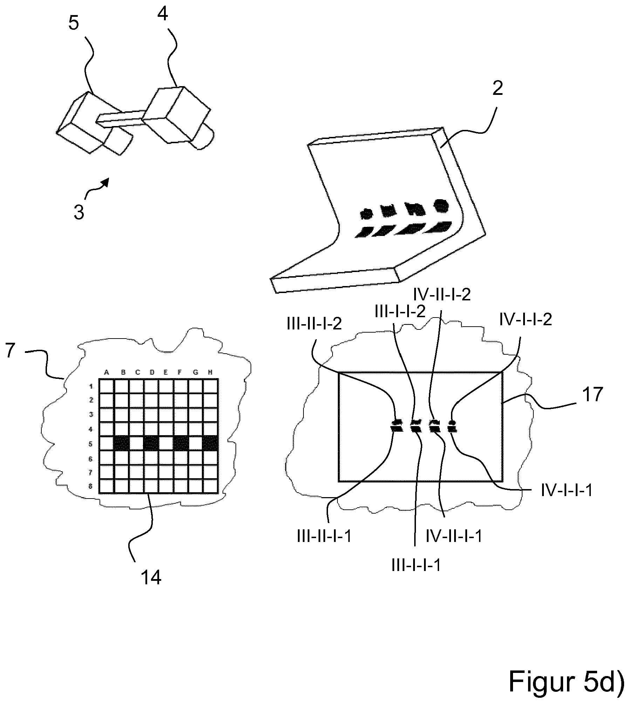

Aus Figur 5d) ist erkennbar, dass für die untergeordneten Projektionsmuster-Segmente B5, D5, F5 und H5, d. h. für die Projektionsmuster-Segmente III-I-I, III-II-I, IV-I-I und IV-II-I Mehrfachreflexionen in den darüber liegenden Bereich auftreten.

In der Summe ergibt sich durch die Verwendung von Baumstrukturebenen, d. h. durch die hierarchisch gegliederte Durchführung des Verfahrens eine deutliche Ersparnis von notwendigen Messungen zur Berechnung der Projektionsmasken. Für das originäre Verfahren wären für das Ausführungsbeispiels 65 Einzelmessungen notwendig. Wenn nun wie beschrieben drei Baumstrukturebenen nach dem Quad-Tree-Verfahren verwendet, so werden für die erste Baumstrukturebene vier Messungen, für die zweite Baumstrukturebene acht Messungen und für die dritte Baumstrukturebene ebenfalls acht Messungen benötigt. Zusätzlich zu der einen (ggfs. nötigen) Dunkelmessung zur Aufnahme des Kalibrier-Messbildes ergibt sich eine Gesamtzahl von nur 21 Messungen, mit denen die gleichen Auswerteergebnisse der Teilflächen 15 wie im originären Ansatz gewonnen werden können. Anschließend werden die Projektionsmasken gebildet und die topometrische Messung für jede ermittelte Projektionsmaske durchgeführt. Da diese Verfahrensschritte sowie das Ergebnis gleichartig zum ersten Ausführungsbeispiel sind, wird auf eine detaillierte Beschreibung verzichtet.

In einer weiteren vorteilhaften Ausführungsform werden die Teilflächen 15 in dem (ggf. modifizierten) Messbildern 16 (17) hinsichtlich ihrer Entstehung klassifiziert. Dabei wird zwischen zwei Varianten unterschieden.
a) Entweder ist die jeweilige Teilfläche 15 aus einer direkten Reflexion (also einer einmaligen Reflexion am Objekt) oder
b) einer indirekten Reflexion (also Mehrfachreflexion am Objekt) entstanden.

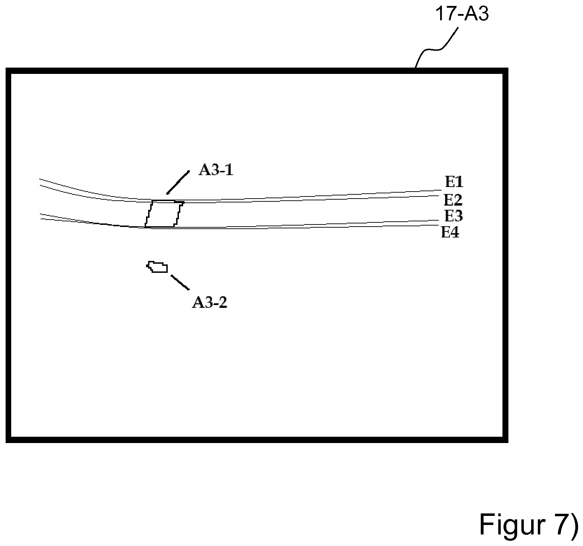

Wie bereits ausgeführt wurde, sind diesen beiden Klassen hinsichtlich ihrer Ausprägung bestimmter Merkmale wie Kontrast, Kompaktheit, etc. signifikant unterschiedlich. Dies lässt sich anhand der Figur 7 anschaulich demonstrieren.

In Figur 7 wird das modifizierte Messbild 17-A3 aus Figur 2d) vergrößert abgebildet. Wie zu erkennen ist, werden die zwei Teilflächen A3-1 und A3-2 detektiert. Zur besseren Veranschaulichung wird nur die Kontur der Teilflächen 15 dargestellt. Da die innere und äußere Orientierung der Projektionseinheit 4 sowie der Bildaufnahmeeinheit 5 bekannt sind, können die Epipolarlinien E1, E2, E3 und E4 der vier Eckpunkte des Projektionsmuster-Segmentes A3 in das modifizierte Messbild 17-A3 eingezeichnet werden.

Die Teilfläche A3-1 des modifizierten Messbildes 17-A3 entsteht durch die direkte Reflexion des ausschließlich von dem Projektionsmuster-Segment A3 beleuchteten Objektes 2. Die äußere Kontur der Teilfläche A3-1 entspricht in guter Näherung einem Viereck. Die vier Begrenzungslinien weisen fast keine Richtungsänderung auf. Dies trifft praktisch für alle Teilflächen zu, die durch direkte Reflexion entstanden sind und deren beleuchteter Bereich auf dem Objekt 2 hinreichend klein ist. Diese Tatsache beruht auf dem Abbildungsprinzip. Sowohl die Projektion des Musters durch die Projektionseinheit 4, als auch die Aufnahme des Messbildes 16 bzw. 17 durch die Bildaufnahmeeinheit 5 funktioniert nach dem Verfahren der Zentralprojektion. Die durch ein Projektionsmuster-Segment 14 beleuchtete Teilfläche des Objektes 2 ist in guter Näherung ein ebener Bereich, sofern die Größe der Teilfläche nur hinreichend klein ist. Für die Zentralprojektion - unter Vernachlässigung des Einflusses von Abbildungsfehlern z. B. hervorgerufen durch Verzeichnungen des abbildenden Objektives gilt, dass eine Gerade als Gerade abgebildet wird. Der auf dem Objekt 2 durch das jeweilig aktive Projektionsmuster-Segment 14 beleuchtete Bereich ist ein Viereck mit in guter Näherung geraden Begrenzungslinien.

Die Teilfläche A3-2 des modifizierten Messbildes 17-A3 entsteht dagegen durch eine zweimalige Reflexion an dem Objekt 2. Ihre geometrische Form ist deutlich unbestimmter. Ebenso ist der Kontrast, also der Grauwerteunterschied zwischen Teilfläche und Hintergrund, deutlich schwächer ausgeprägt. Ferner lässt sich gut erkennen, dass diese Teilfläche A3-2 keinerlei Bezüge zu den Epipolarlinien der Eckpunkte des Projektionsmuster-Segmentes A3 hat. Im Gegensatz dazu wird die Teilfläche A3-1 von den Epipolarlinien umfasst. Die vier Eckpunkte der Teilfläche A3-1 liegen jeweils genau auf der zugehörigen Epipolarlinie des zugehörigen Eckpunktes des Projektionsmuster-Segmentes A3 auf dem Mustergenerator 7. Auf Grundlage dieser Analyse kann also die Teilfläche A3-1 als direkte Reflexionsfläche und die Teilfläche A3-2 als indirekte Reflexionsfläche klassifiziert werden.

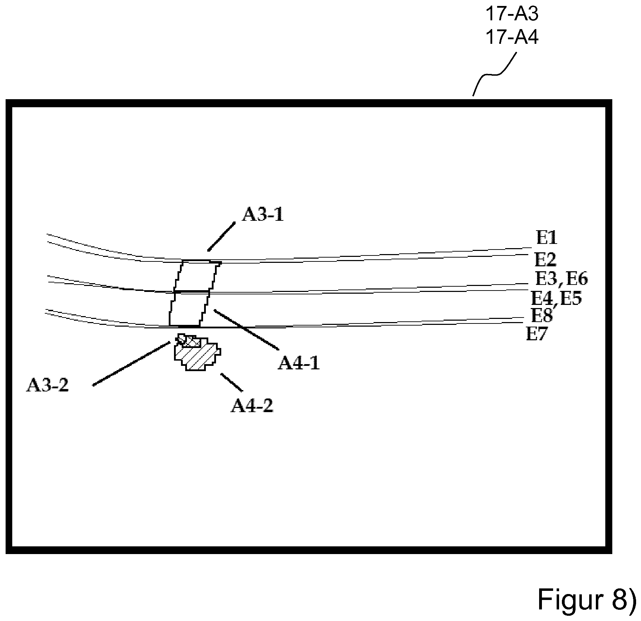

Figur 8 zeigt in einer gemeinsamen Darstellung die detektierten Teilflächen A3-1, A3-2 (schraffiert hervorgehoben), die Teilflächen A4-1 und A4-2 (schraffiert hervorgehoben) für die Segmente A3 und A4 sowie die Epipolarlinien E1, E2, E3 und E4 für das Segment A3, sowie die Epipolarlinien E5, E6, E7 oder E8 für das Segment A4. Auf Basis der vorgenannten Entscheidungskriterien können die Teilflächen A4-1 und A4-2 ebenfalls klassifiziert werden. Zudem kann hier der Nachbarschaftsansatz verwendet werden. Da die beiden zugehörigen Projektionsmuster-Segment A3 und A4 direkte Nachbarn sind, die beiden Teilflächen A3-1 und A4-1 direkt aneinander angrenzen und die Teilfläche A3-1 als direkte Reflexionsfläche vorbekannt ist, kann die Teilfläche A4-1 ebenfalls als direkte Reflexionsfläche klassifiziert werden. Die Teilfläche A4-2 wird dagegen als indirekte Reflexionsfläche eingestuft.

Wie aus Figur 8 ersichtlich ist, überschneiden sich die beiden indirekten Teilflächen A3-2 und A4-2. Nach dem bisherigen Verfahren dürfen also die beiden zugehörigen Segmente A3 und A4 nicht in einer gemeinsamen Projektionsmaske enthalten sein, da ihre zugehörigen Teilflächen sich in den modifizierten Messbildern 17 überschneiden. Da aber nur die direkten Teilflächen bei der späteren Messung mit einer Projektionsmaske ausgewertet werden sollen, ist eine Überschneidung dieser beiden indirekten Teilflächen unerheblich. Somit können also die Projektionsmuster-Segmente A3 und A4 doch innerhalb einer Projektionsmaske enthalten sein.

In vielen praktischen Anwendungen überschneiden sich auch die direkten Reflexionsflächen zwischen zwei direkt benachbarten Segmenten. Die Ursachen sind typischerweise Unschärfephänomene durch die Unvollkommenheit der Projektionsoptik 8 bzw. Empfangsoptik 10. Weiterhin kann es zu einer unscharfen Projektion bzw. Abbildung kommen, wenn sich das Objekt 2 außerhalb der Schärfeebene der Projektionseinheit 4 bzw. der Bildaufnahmeeinheit 5 befindet. Im den bisher skizzierten Ausführungsbeispielen wurde dieser Effekt bisher nicht betrachtet.

Unter Erweiterung der Ausführungsbeispiele um diesen Tatbestand dürften bei der Durchführung des Verfahrens diverse benachbarte Projektionsmuster-Segmente 14 nicht Teil einer gemeinsamen Projektionsmaske sein. Die Anzahl der notwendigen Projektionsmasken würde damit deutlich ansteigen. Zudem würden die entstehenden Projektionsmasken eine Vielzahl von isolierten Projektionsmuster-Segmenten 14 (also Projektionsmuster-Segmente ohne Beleuchtung der direkten Nachbarsegmente) enthalten. Wie bereits ausgeführt wurde, ist die Überschneidung von direkten Reflexionsflächen im modifizierten Messbild 17 aber genauso unschädlich wie die Überschneidung von indirekten Reflexionsflächen. Es muss lediglich die Überschneidung von direkten und indirekten Reflexionsflächen miteinander verhindert werden. Durch Berücksichtigung dieser Erkenntnis können Projektionsmasken mit vielen isolierten Elementen aufgrund von überlappenden direkten Teilflächen aufgrund von sich durch die Unschärfe überlappenden direkten Teilflächen vermieden werden.

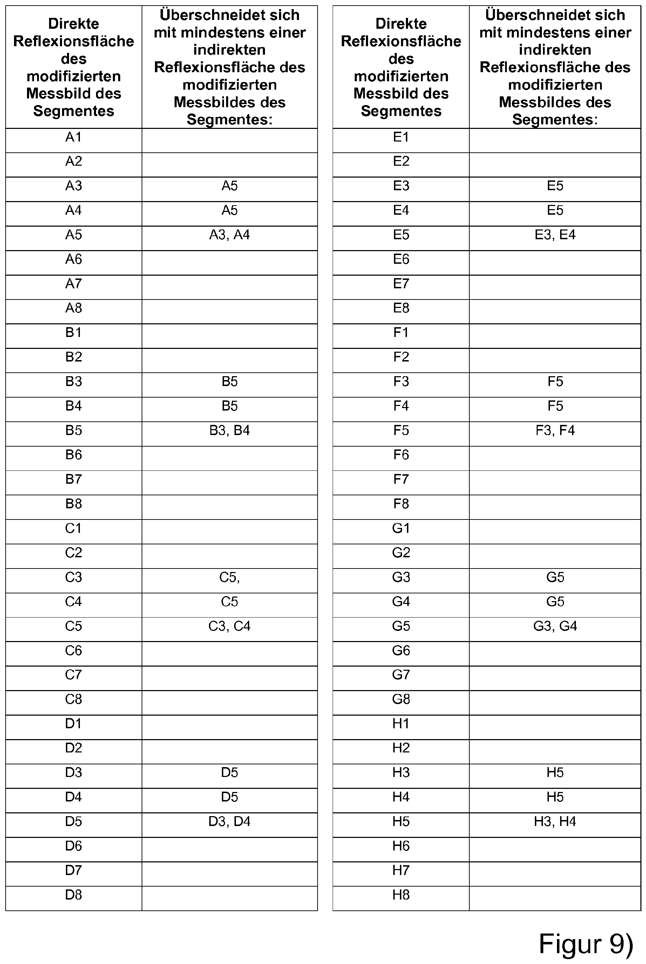

Figur 9 zeigt für das Anwendungsbeispiel aus Figur 2 die sich ausschließenden Projektionsmuster-Segmente 14, bei denen sich die jeweilige direkte Reflexionsfläche des einen Projektionsmuster-Segmentes mit mindestens einer indirekten Reflexionsfläche des anderen Projektionsmuster-Segmentes überlappen.

Ein Vergleich dieses tabellarischen Auswertungsergebnisses mit der ursprünglichen Analyse ist Figur 3 hinsichtlich der Überlappung von Teilflächen ohne vorherige Klassifikation zeigt, dass diverse sich ausschließende Projektionsmuster-Segmente 14 innerhalb einer Projektionsmaske beim eingangs beschriebenen Standardverfahren weggefallen sind. Da sich in diesen Fällen nur indirekte Teilflächen überlagern, die sowieso nicht ausgewertet werden sollen, können diese bei der optimierten Maskengenerierung doch noch zusammen beleuchtet werden.

Anhand der Ergebnisse aus Figur 9 kann die durch die Projektionseinheit 4 beleuchtete Fläche des Objektes 2 mit nur zwei anstatt 3 Projektionsmasken ohne den Einfluss von Messfehlern aufgrund von Mehrfachreflexionen gemessen werden. Hierzu werden die Projektionsmasken 1 und 3, jeweils dargestellt in den Figur 2g) und 2i) vereinigt und bilden an die neue Projektionsmaske M1*. Die zweite Projektionsmaske M2 bleibt in der vorher beschriebenen Form gemäß Figur 2h) bestehen. Durch die Verringerung der Anzahl der Projektionsmasken von drei Masken M1 bis M3 auf zwei Masken M1* und M2 kann in diesem Beispiel ein Drittel der Messzeit zur Bestimmung der 3D-Koordinaten des aus dieser Sensorausrichtung messbaren Bereichs des Objektes 2 eingespart werden.

## Patentansprüche

1. Verfahren zum dreidimensionalen optischen Vermessen von Objekten (2) mit einem topometrischen Messverfahren mittels Projektion mindestens eines Musters auf ein Objekt (2) mit einem Mustergenerator (7) und Aufnehmen mindestens einer Abbildung des Objektes (2) mit dem aufprojizierten Muster mit mindestens einer Bildaufnahmeeinheit (5) zur topometrischen Vermessung des Objektes (2), **gekennzeichnet durch**:
a) Ermitteln von Teilflächen (15) in mehreren Abbildungen je beteiligter Bildaufnahmeeinheit (5) des Objektes (2), die ein von dem Objekt (2) rückgestreutes Signal eines jeweils auf das Objekt (2) projizierten Projektionsmuster-Segmentes (14) des Mustergenerators (7) enthalten,
b) Erstellen von mindestens einer Projektionsmaske (Mᵢ; i ∈ **N**\{0})), welche jeweils mehrere Projektionsmuster-Segmente (14) umfasst, wobei die Projektionsmuster-Segmente (14) einer Projektionsmaske (Mᵢ) so ausgewählt sind, dass sich die ermittelten Teilflächen (15) der Projektionsmuster-Segmente (14) in den Abbildungen je beteiligter Bildaufnahmeeinheit (5) nicht gegenseitig überlappen, und
c) Durchführen der topometrischen Vermessung des Objektes (2) jeweils **durch** Projektion mindestens eines Musters mittels der mindestens einen erstellten Projektionsmaske (Mᵢ; i ∈ **N**\{0}).

2. Verfahren nach Anspruch 1, **dadurch gekennzeichnet, dass** das Ermitteln der Teilflächen (15) sequentiell für sich nicht überlappende Projektionsmuster-Segmente (14) zeitlich hintereinander erfolgt.

3. Verfahren nach Anspruch 1, **dadurch gekennzeichnet, dass** das Ermitteln der Teilflächen (15) parallel für mehrere sich nicht überlappende Projektionsmuster-Segmente (14) zusammen erfolgt.

4. Verfahren nach einem der vorhergehenden Ansprüche, **gekennzeichnet durch** Ermitteln der Teilflächen (15) **durch**:
- Definieren übergeordneter Projektionsmuster-Segmente (14), die eine Anzahl räumlich benachbarter Segmente des Mustergenerators (7) umfassen,
- Ermitteln der Teilflächen (15) in den Abbildungen des Objektes (2), die ein von dem Objekt (2) rückgestreutes Signal des auf das Objekt (2) projizierten übergeordneten Projektionsmuster-Segmentes (14) enthalten,
- Bilden von Teilmengen von mehreren übergeordneten Projektionsmuster-Segmenten (14), die keine sich überlappenden Teilflächen (15) haben,
und wobei das Erstellen der mindestens einen Projektionsmaske (Mᵢ; i ∈ **N**\{0}) für die gebildeten Teilmengen derart erfolgt, dass eine Projektionsmaske eine Mehrzahl von Projektionsmuster-Segmenten (14) aus den mehreren übergeordneten Projektionsmuster-Segmenten (14) der Teilmengen umfasst.

5. Verfahren nach einem der vorhergehenden Ansprüche, **gekennzeichnet durch**
- Definieren übergeordneter Projektionsmuster-Segmente, die eine Anzahl räumlich benachbarter Projektionsmuster-Segmente des Mustergenerators (7) umfassen, wobei die übergeordneten Projektionsmuster-Segmente zusammen mit den Projektionsmuster-Segmenten des Mustergenerators (7) eine hierarchische Ordnung einer Mehrzahl von Ebenen bilden,
- Aufnehmen je einer Abbildung je beteiligter Bildaufnahmeeinheit (5) für jedes übergeordnete Projektionsmuster-Segment der obersten Hierarchieebene des Mustergenerators (7), wobei das jeweilige übergeordnete Projektionsmuster-Segment exklusiv das Objekt (2) beleuchtet,
- Sequenzielles Durchführen folgender Unterschritte für jede Hierarchieebene mit Ausnahme der obersten Hierarchieebene
∘ Bilden von Teilmengen von mehreren Projektionsmuster-Segmenten (14) der jeweiligen Hierarchieebene, derart, dass
▪ je Teilmenge die direkt übergeordneten Projektionsmuster-Segmente (14) der direkt übergeordneten Hierarchieebene keine sich überlappenden Teilflächen (15) je beteiligter Bildaufnahmeeinheit (5) haben,
▪ je direktem übergeordneten Projektionsmuster-Segment (14) der direkt übergeordneten Hierarchieebene maximal ein Projektionsmuster-Segment (14) der jeweiligen Hierarchieebene Mitglied der Teilmenge ist,
und die Summe aller Teilmengen der jeweiligen Hierarchieebene eine vordefinierte Menge der Projektionsmuster-Segmente (14) der jeweiligen Hierarchieebene des Mustergenerators (7) umfasst.
∘ Aufnehmen von einer Abbildung je beteiligter Bildaufnahmeeinheit (5) für jede Teilmenge der jeweiligen Hierarchieebene, wobei die jeweiligen zugehörigen Projektionsmuster-Segmente der Teilmenge exklusiv das Objekt beleuchten.

6. Verfahren nach einem der vorhergehenden Ansprüche, **dadurch gekennzeichnet, dass** die Projektionsmuster-Segmente (14) unterschiedliche Größen haben.

7. Verfahren nach einem der vorhergehenden Ansprüche, **gekennzeichnet durch** Klassifizieren der ermittelten Teilflächen (15) in den Abbildungen in eine direkte Reflexionsfläche, bei der das Signal eines Projektionsmuster-Segmentes (14) nach einmaliger Reflexion direkt von dem Objekt (2) rückgestreut ist, und in eine indirekte Reflexionsfläche, bei der das Signal eines Projektionsmuster-Segmentes (14) nach mehrfacher Reflexion am Objekt (2) von dem Objekt (2) rückgestreut ist, und Zuordnen der indirekten Reflexionsflächen jeweils zu den Projektionsmuster-Segmenten (14), welche die zugeordnete indirekte Reflexionsfläche direkt beleuchten.

8. Verfahren nach Anspruch 7, **dadurch gekennzeichnet, dass** die Projektionsmasken (Mᵢ) derart erstellt werden, dass sich direkte Reflexionsflächen nicht mit indirekten Reflexionsflächen gegenseitig überlappen.

9. Verfahren nach einem der Ansprüche 7 oder 8, **dadurch gekennzeichnet, dass** das Klassifizieren der ermittelten Teilflächen (15) anhand der geometrischen Form der jeweiligen Form der jeweiligen Teilfläche (15), des Kontrastes der jeweiligen Teilfläche (15), der Position der jeweiligen Teilfläche (15) bezogen auf andere Teilflächen (15) und/oder anhand der Epipolargeometrie der mindestens einen Bildaufnahmeeinheit (5) sowie optional des Mustergenerators (7) erfolgt.

10. Verfahren nach einem der vorhergehenden Ansprüche, **gekennzeichnet durch**:
- Aufnehmen mindestens eines Kalibrier-Messbildes des zu vermessenden Objektes (2), bei dem das Objekt (2) nicht beleuchtet ist,
- Berechnen von modifizierten Messbildern (17) für jedes Projektionsmuster-Segment (14) jeweils **durch** Bildung der Differenz zwischen der jeweiligen bei Beleuchtung des Objektes (2) mit dem jeweiligen Projektionsmuster-Segment (14) aufgenommenen Abbildung (16) und dem entsprechenden Kalibier-Messbild; und
- Durchführen der Schritte des Ermittelns von Teilflächen der Projektionsmuster-Segmente in den modifizierten Messbildern (17), und des Erstellens von mindestens einer Projektionsmaske (Mᵢ) anhand der modifizierten Messbilder (17) derart, dass die Projektionsmuster-Segmente (14) einer Projektionsmaske so ausgewählt werden, dass sich die ermittelten Teilflächen (15) der Projektionsmuster-Segmente (14) in den modifizierten Messbildern (17) nicht gegenseitig überlappen.

11. Verfahren nach einem der vorhergehenden Ansprüche, **dadurch gekennzeichnet, dass** bei einer wiederholenden automatisierten topometrischen Messung eines Objekts (2) oder gleichartiger Objekte eine oder mehrere Projektionsmasken (Mᵢ) für jede Ausrichtung des topometrischen Sensors (3) bezüglich des Objekts (2) in einem ersten Schritt einmalig ermittelt und bei folgenden Messungen gleichartig angewendet werden.

12. Vorrichtung (1) zum dreidimensionalen optischen Vermessen von Objekten (2) mit einem topometrischen Messverfahren, wobei die Vorrichtung (1) einen topometrischen Sensor (3) umfassend mindestens eine Projektionseinheit (4) zur Beleuchtung eines Objektes (2) mit wahlweisen Projektionsmuster-Segmenten (14) eines auswählbaren Projektionsmusters und mindestens eine Bildaufnahmeeinheit (5), sowie eine Steuerungseinheit (11) und eine Auswerteeinheit (12) zur topometrischen Auswertung der mit der Bildaufnahmeeinheit (5) aufgenommenen Bilder des zu vermessenden Objektes (2) hat, **dadurch gekennzeichnet, dass** die Auswerteeinheit (12) zur
a) Ermittlung von Teilflächen (15) in mehreren Abbildungen des Objektes (2) je beteiligter Bildaufnahmeeinheit (5), die ein von dem Objekt (2) zurückgestreutes Signal eines jeweils auf das Objekt (2) projizierten Projektionsmuster-Segmentes (14) des Mustergenerators (7) enthalten ,
b) Erstellung von mindestens einer Projektionsmaske (Mᵢ), welche jeweils mehrere Projektionsmuster-Segmente (14) umfasst, wobei die Projektionsmuster-Segmente (14) einer Projektionsmaske (Mᵢ) so ausgewählt sind, dass sich die ermittelten Teilflächen (15) der Projektionsmuster der Projektionsmuster-Segmente (14) in den Abbildungen je beteiligter Bildaufnahmeeinheit (5) nicht gegenseitig überlappen,
und die Vorrichtung (1) zum
c) Durchführen der topometrischen Vermessung des Objektes (2) jeweils durch Projektion mindestens eines Musters mittels der mindestens einen erstellten Projektionsmaske (Mᵢ) mittels Ansteuerung der Projektionseinheit (4) durch die Steuerungseinheit (11), Aufnehmen mindestens eines Messbildes (16) durch die mindestens eine Bildaufnahmeeinheit (5) und topometrisches Auswerten des mindestens einen aufgenommenen Messbildes (16) je beteiligter Bildaufnahmeeinheit (5) mit der Auswerteeinheit (12)
eingerichtet ist.

13. Vorrichtung (1) nach Anspruch 12, **dadurch gekennzeichnet, dass** die Projektionseinheit (4) einen programmierbaren Mustergenerator (7) hat.

14. Vorrichtung (1) nach Anspruch 13, **dadurch gekennzeichnet, dass** die Projektionseinheit (4) mindestens eine digitale Spiegelanordnung (Digital Mirror Device - DMD) mindestens ein lichtdurchlässiges Flüssigkristall-Anzeigemodul (LCD) oder mindestens ein lichtreflektierendes Flüssigkristall-Anzeigemodul (LCoS) hat.

15. Vorrichtung (1) nach einem der Ansprüche 12 bis 14, **dadurch gekennzeichnet, dass** die Vorrichtung (1) auf einem gesteuert beweglichen Handhabungsautomaten, insbesondere einem Industrieroboter, angeordnet ist, wobei die Steuerungseinheit (11) zur wiederholten, gleichartigen Anwendung von für die erforderlichen Ausrichtungen des für die topometrische Vermessung eingesetzten topometrischen Sensors (3) auf das Objekt (2) erstellten Projektionsmasken für eine Anzahl von topometrischen Messungen dieses Objektes (2) oder gleichartiger Objekte (2) eingerichtet ist.

16. Computerprogramm mit Programmcodemitteln zur Steuerung der Durchführung des Verfahrens nach einem der Ansprüche 1 bis 11, wenn das Computerprogramm auf der Steuereinrichtung einer Vorrichtung nach einem der Ansprüche 12 bis 15 ausgeführt wird, wobei das Computerprogramm zur Ermittlung von Teilflächen (15) in den Abbildungen des Objektes (2), die ein von dem Objekt (2) rückgestreutes Signal eines jeweils auf das Objekt (2) projizierten Projektionsmuster-Segmentes (14) des Mustergenerators (7) enthalten, und zum Erstellen von mindestens einer Projektionsmaske (Mᵢ), welche jeweils mindestens ein Projektionsmuster-Segment (14) umfasst, eingerichtet ist, wobei die Projektionsmuster-Segmente (14) einer Projektionsmaske (Mᵢ) von dem Computerprogramm so ausgewählt werden, dass sich die ermittelten Teilflächen der Projektionsmuster-Segmente (14) in den Abbildungen nicht gegenseitig überlappen.

## Claims

1. Method for three-dimensionally optically measuring objects (2) with a topometric measurement method by way of projection of at least one pattern onto an object (2) using a pattern generator (7) and recording at least one image of the object (2) with the projected-on pattern using at least one image recording unit (5) for the topometric measurement of the object (2), **characterized by**:
a) ascertaining partial surfaces (15) in a plurality of images per involved image recording unit (5) of the object (2), which contain a signal, scattered back by the object (2), of a projection pattern segment (14) of the pattern generator (7) which has in each case been projected onto the object (2),
b) creating at least one projection mask (Mᵢ; i ∈ N\{0}), which comprises in each case a plurality of projection pattern segments (14), wherein the projection pattern segments (14) of a projection mask (Mᵢ) are selected such that the ascertained partial surfaces (15) of the projection pattern segments (14) do not overlap one another in the images per involved image recording unit (5), and
c) performing the topometric measurement of the object (2) in each case by way of projection of at least one pattern using the at least one created projection mask (Mᵢ; i ∈ N\{0}).

2. Method according to Claim 1, **characterized in that** the ascertaining of the partial surfaces (15) is performed sequentially in temporal succession for projection pattern segments (14) which do not overlap.

3. Method according to Claim 1, **characterized in that** the ascertaining of the partial surfaces (15) is performed in parallel for a plurality of non-overlapping projection pattern segments (14) together.

4. Method according to one of the preceding claims, **characterized by** ascertaining the partial surfaces (15) by:
- defining superordinate projection pattern segments (14), which comprise a number of spatially adjacent segments of the pattern generator (7),
- ascertaining the partial surfaces (15) in the images of the object (2), which contain a signal, scattered back by the object (2), of the superordinate projection pattern segment (14) which has been projected onto the object (2),
- forming subsets of a plurality of superordinate projection pattern segments (14), which have no overlapping partial surfaces (15),
and wherein the creating of the at least one projection mask (Mᵢ; i ∈ N\{0}) for the formed subsets is performed such that a projection mask comprises a plurality of projection pattern segments (14) from the plurality of superordinate projection pattern segments (14) of the subsets.

5. Method according to one of the preceding claims, **characterized by**
- defining superordinate projection pattern segments which comprise a number of spatially adjacent projection pattern segments of the pattern generator (7), wherein the superordinate projection pattern segments together with the projection pattern segments of the pattern generator (7) form a hierarchical order of a plurality of planes,
- recording in each case one image per involved image recording unit (5) for each superordinate projection pattern segment of the uppermost hierarchy plane of the pattern generator (7), wherein the respective superordinate projection pattern segment illuminates exclusively the object (2),
- sequentially performing the following sub-steps for each hierarchy plane with the exception of the uppermost hierarchy plane
∘ forming subsets of a plurality of projection pattern segments (14) of the respective hierarchy plane, such that
▪ per subset, the directly superordinate projection pattern segments (14) of the directly superordinate hierarchy plane have no overlapping partial surfaces (15) per involved image recording unit (5),
▪ per direct superordinate projection pattern segment (14) of the directly superordinate hierarchy plane, at most one projection pattern segment (14) of the respective hierarchy plane is a member of the subset,
and the sum of all subsets of the respective hierarchy plane comprises a predefined set of the projection pattern segments (14) of the respective hierarchy plane of the pattern generator (7),
∘ recording of an image per involved image recording unit (5) for each subset of the respective hierarchy plane, wherein the respective associated projection pattern segments of the subset illuminates exclusively the object.

6. Method according to one of the preceding claims, **characterized in that** the projection pattern segments (14) have different sizes.

7. Method according to one of the preceding claims, **characterized by** classifying the ascertained partial surfaces (15) in the images into a direct reflection surface, in which the signal of a projection pattern segment (14) is scattered back directly by the object (2) after one reflection, and into an indirect reflection surface, in which the signal of a projection pattern segment (14) is scattered back by the object (2) after multiple reflections on the object (2), and assigning the indirect reflection surfaces in each case to the projection pattern segments (14) which directly illuminate the associated indirect reflection surface.

8. Method according to Claim 7, **characterized in that** the projection masks (Mᵢ) are created such that direct reflection surfaces do not overlap with indirect reflection surfaces.

9. Method according to either of Claims 7 and 8, **characterized in that** the classification of the ascertained partial surfaces (15) is effected on the basis of the geometric shape of the respective shape of the respective partial surface (15), of the contrast of the respective partial surface (15), of the position of the respective partial surface (15) with respect to other partial surfaces (15) and/or on the basis of the epipolar geometry of the at least one image recording unit (5) and optionally of the pattern generator (7).

10. Method according to one of the preceding claims, **characterized by**:
- recording at least one calibration measurement image of the object (2) to be measured, in which the object (2) is not illuminated,
- calculating modified measurement images (17) for each projection pattern segment (14) in each case by forming the difference between the respective image (16) recorded during the illumination of the object (2) with the respective projection pattern segment (14) and the corresponding calibration measurement image; and
- performing the steps of ascertaining partial surfaces of the projection pattern segments in the modified measurement images (17),
and creating at least one projection mask (Mᵢ) on the basis of the modified measurement images (17) such that the projection pattern segments (14) of a projection mask are selected such that the ascertained partial surfaces (15) of the projection pattern segments (14) do not overlap one another in the modified measurement images (17) .

11. Method according to one of the preceding claims, **characterized in that**, in the case of a repeating automated topometric measurement of an object (2) or of objects of the same type, one or more projection masks (Mᵢ) are ascertained once for each orientation of the topometric sensor (3) with respect to the object (2) in a first step and applied in the same manner in subsequent measurements.

12. Apparatus (1) for three-dimensionally optically measuring objects (2) with a topometric measurement method, wherein the apparatus (1) includes a topometric sensor (3) comprising at least one projection unit (4), for illuminating an object (2) with optional projection pattern segments (14) of a selectable projection pattern, and at least one image recording unit (5), and also a control unit (11) and an evaluation unit (12) for the topometric evaluation of the images recorded with the image recording unit (5) of the object (2) to be measured, **characterized in that** the evaluation unit (12) is set up for
a) ascertaining partial surfaces (15) in a plurality of images of the object (2) per involved image recording unit (5), which contain a signal, scattered back by the object (2) of a projection pattern segment (14) of the pattern generator (7), which has in each case been projected onto the object (2),
b) creating at least one projection mask (Mᵢ), which comprises in each case a plurality of projection pattern segments (14), wherein the projection pattern segments (14) of a projection mask (Mᵢ) are selected such that the ascertained partial surfaces (15) of the projection patterns of the projection pattern segments (14) do not overlap one another in the images per involved image recording unit (5),
and the apparatus (1) is set up for
c) performing the topometric measurement of the object (2) in each case by way of projection of at least one pattern using the at least one created projection mask (Mᵢ) by actuating the projection unit (4) by way of the control unit (11), recording at least one measurement image (16) by way of the at least one image recording unit (5), and topometric evaluation of the at least one recorded measurement image (16) per involved image recording unit (5) using the evaluation unit (12).

13. Apparatus (1) according to Claim 12, **characterized in that** the projection unit (4) has a programmable pattern generator (7).

14. Apparatus (1) according to Claim 13, **characterized in that** the projection unit (4) includes at least one digital mirror device (DMD), at least one light-transmissive liquid-crystal display module (LCD) or at least one light-reflective liquid-crystal display module (LCoS).

15. Apparatus (1) according to one of Claims 12 to 14, **characterized in that** the apparatus (1) is arranged on a control-movable automated handling system, in particular an industrial robot, wherein the control unit (11) is set up for the repeated application, of the same type, of projection masks, which are created for the necessary orientations of the topometric sensor (3), used for the topometric measurement, toward the object (2), for a number of topometric measurements of said object (2), or objects (2) of the same type.

16. Computer program with program code means for controlling the performance of the method according to one of Claims 1 to 11 when the computer program is executed on the control device of an apparatus according to one of Claims 12 to 15, wherein the computer program is set up for ascertaining partial surfaces (15) in the images of the object (2), which contain a signal, scattered back by the object (2), of a projection pattern segment (14) of the pattern generator (7), which is projected in each case onto the object (2), and for creating at least one projection mask (Mᵢ), which comprises in each case at least one projection pattern segment (14), wherein the projection pattern segments (14) of the projection mask (Mᵢ) are selected by the computer program such that the ascertained partial surfaces of the projection pattern segments (14) do not overlap one another in the images.

## Revendications

1. Procédé de mesurage optique tridimensionnel d'objets (2) avec un procédé de mesure topométrique au moyen de la projection d'au moins un motif sur un objet (2) avec un générateur de motifs (7) et de l'enregistrement d'au moins une représentation de l'objet (2) sur lequel est projeté le motif avec au moins une unité de capture d'images (5) en vue du mesurage topométrique de l'objet (2), **caractérisé par** :
a) détermination de surfaces partielles (15) dans plusieurs représentations, pour chaque unité de capture d'images (5) participante, de l'objet (2), lesquelles contiennent un signal rétrodiffusé par l'objet (2) d'un segment de motif de projection (14) du générateur de motifs (7) respectivement projeté sur l'objet (2),
b) création d'au moins un masque de projection (Mᵢ ; i e N\{0}), lequel comporte respectivement plusieurs segments de motif de projection (14), les segments de motif de projection (14) d'un masque de projection (Mᵢ) étant choisis de telle sorte que les surfaces partielles (15) déterminées des segments de motif de projection (14) ne se chevauchent pas réciproquement dans les représentations pour chaque unité de capture d'images (5) participante, et
c) réalisation du mesurage topométrique de l'objet (2) respectivement par projection d'au moins un motif au moyen de l'au moins un masque de projection (Mᵢ ; i e N\{0}) créé.

2. Procédé selon la revendication 1, **caractérisé en ce que** la détermination des surfaces partielles (15) est effectuée séquentiellement et l'une derrière l'autre dans le temps pour des segments de motif de projection (14) qui ne se chevauchent pas.

3. Procédé selon la revendication 1, **caractérisé en ce que** la détermination des surfaces partielles (15) est effectuée en parallèle et conjointement pour plusieurs segments de motif de projection (14) qui ne se chevauchent pas.

4. Procédé selon l'une des revendications précédentes, **caractérisé par** la détermination des surfaces partielles (15) par :
- définition des segments de motif de projection (14) de niveau supérieur qui comportent un certain nombre de segments voisins dans l'espace du générateur de motifs (7),
- détermination des surfaces partielles (15) dans les représentations de l'objet (2) qui contiennent un signal rétrodiffusé par l'objet (2) du segment de motif de projection (14) de niveau supérieur projeté sur l'objet (2),
- formation de quantités partielles de plusieurs segments de motif de projection (14) de niveau supérieur qui ne comprennent pas de surfaces partielles (15) se chevauchant,
et la création de l'au moins un masque de projection (Mᵢ ; i e N\{0}) pour les quantités partielles formées étant effectuée de telle sorte qu'un masque de projection comporte une pluralité de segments de motif de projection (14) issus plusieurs des segments de motif de projection (14) de niveau supérieur des quantités partielles.

5. Procédé selon l'une des revendications précédentes, **caractérisé par**
- définition de segments de motif de projection de niveau supérieur qui comportent un certain nombre de segments de motif de projection voisins dans l'espace du générateur de motifs (7), les segments de motif de projection de niveau supérieur, en association avec les segments de motif de projection du générateur de motifs (7), formant un ordre hiérarchique d'une pluralité de plans,
- enregistrement respectivement d'une représentation pour chaque unité de capture d'images (5) participante pour chaque segment de motif de projection de niveau supérieur du plan hiérarchique le plus élevé du générateur de motifs (7), le segment de motif de projection de niveau supérieur respectif éclairant l'objet (2) de manière exclusive,
- exécution séquentielle des étapes secondaires suivantes pour chaque plan hiérarchique à l'exception du plan hiérarchique le plus élevé
o formation de quantités partielles de plusieurs segments de motif de projection (14) du plan hiérarchique respectif, de telle sorte que
* pour chaque quantité partielle, les segments de motif de projection (14) de niveau immédiatement supérieur du plan hiérarchique de niveau immédiatement supérieur ne comportent aucune surface partielle (15) se chevauchant de chaque unité de capture d'images (5) participante,
* pour chaque segment de motif de projection (14) de niveau immédiatement supérieur du plan hiérarchique de niveau immédiatement supérieur, au maximum un segment de motif de projection (14) du plan hiérarchique respectif est membre de la quantité partielle,
et la somme de toutes les quantités partielles du plan hiérarchique respectif comporte une quantité prédéfinie des segments de motif de projection (14) du plan hiérarchique respectif du générateur de motifs (7),
o enregistrement d'une représentation pour chaque unité de capture d'images (5) participante pour chaque quantité partielle du plan hiérarchique respectif, les segments de motif de projection respectivement associés de la quantité partielle éclairant l'objet de manière exclusive.

6. Procédé selon l'une des revendications précédentes, **caractérisé en ce que** les segments de motif de projection (14) ont des tailles différentes.

7. Procédé selon l'une des revendications précédentes, **caractérisé par** la classification des surfaces partielles (15) déterminées dans les représentations en une surface à réflexion directe, avec laquelle le signal d'un segment de motif de projection (14) est rétrodiffusé directement par l'objet (2) après une réflexion unique, et en une surface à réflexion indirecte, avec laquelle le signal d'un segment de motif de projection (14) est rétrodiffusé par l'objet (2) après plusieurs réflexions sur l'objet (2), et l'affectation des surfaces à réflexion indirecte respectivement aux segments de motif de projection (14) qui éclairent directement la surface à réflexion indirecte associée.

8. Procédé selon la revendication 7, **caractérisé en ce que** les masques de projection (Mᵢ) sont créés de telle sorte que les surfaces à réflexion directe et les surfaces à réflexion indirecte ne se chevauchent pas mutuellement.

9. Procédé selon l'une des revendications 7 ou 8, **caractérisé en ce que** la classification des surfaces partielles (15) déterminées est effectuée à l'aide de la forme géométrique de la forme respective de la surface partielle (15) respective, du contraste de la surface partielle (15) respective, de la position de la surface partielle (15) respective par rapport aux autres surfaces partielles (15) et/ou à l'aide de la géométrie épipolaire de l'au moins une unité de capture d'images (5) et aussi, en option, du générateur de motifs (7).

10. Procédé selon l'une des revendications précédentes, **caractérisé par** :
- enregistrement d'au moins une image de mesure d'étalonnage de l'objet (2) à mesurer, avec laquelle l'objet (2) n'est pas éclairé,
- calcul d'images de mesure (17) modifiées pour chaque segment de motif de projection (14) respectivement en calculant la différence entre la représentation (16) respectivement enregistrée lors de l'éclairage de l'objet (2) avec le segment de motif de projection (14) respectif et l'image de mesure d'étalonnage correspondante ; et
- exécution des étapes de détermination de surfaces partielles des segments de motif de projection dans les images de mesure (17) modifiées et de création d'au moins un masque de projection (Mᵢ) à l'aide des images de mesure (17) modifiées de telle sorte que les segments de motif de projection (14) d'un masque de projection sont sélectionnés de telle sorte que les surfaces partielles (15) déterminées des segments de motif de projection (14) ne se chevauchent pas mutuellement dans les images de mesure (17) modifiées.

11. Procédé selon l'une des revendications précédentes, **caractérisé en ce que** lors d'une mesure topométrique automatisée répétée d'un objet (2) ou d'objets du même type, un ou plusieurs masques de projection (Mᵢ) sont déterminés une fois dans une première étape pour chaque orientation du capteur topométrique (3) par rapport à l'objet (2) et sont utilisés de la même manière lors des mesures suivantes.

12. Dispositif (1) de mesurage optique tridimensionnel d'objets (2) avec un procédé de mesure topométrique, le dispositif (1) comportant un capteur topométrique (3) comprenant au moins une unité de projection (4) destinée à éclairer un objet (2) avec des segments de motif de projection (14) au choix d'un motif de projection pouvant être sélectionné et au moins une unité de capture d'images (5), ainsi qu'une unité de commande (11) et une unité d'interprétation (12) destinée à l'interprétation topométrique des images de l'objet (2) à mesurer, enregistrées avec l'unité de capture d'images (5), **caractérisé en ce que** l'unité d'interprétation (12) est conçue pour
a) déterminer des surfaces partielles (15) dans plusieurs représentations de l'objet (2) de chaque unité de capture d'images (5) participante, lesquelles contiennent un signal rétrodiffusé par l'objet (2) d'un segment de motif de projection (14) du générateur de motifs (7) respectivement projeté sur l'objet (2),
b) créer au moins un masque de projection (Mᵢ), lequel comporte respectivement plusieurs segments de motif de projection (14), les segments de motif de projection (14) d'un masque de projection (Mᵢ) étant choisis de telle sorte que les surfaces partielles (15) déterminées du motif de projection des segments de motif de projection (14) ne se chevauchent pas réciproquement dans les représentations pour chaque unité de capture d'images (5) participante,
et le dispositif (1) est conçu pour
c) réaliser le mesurage topométrique de l'objet (2) respectivement par projection d'au moins un motif au moyen de l'au moins un masque de projection (Mᵢ) créé au moyen du pilotage de l'unité de projection (4) par l'unité de commande (11), enregistrer au moins une image de mesure (16) par l'au moins une unité de capture d'images (5) et interpréter topométriquement de l'au moins une image de mesure (16) enregistrée de chaque unité de capture d'images (5) participante avec l'unité d'interprétation (12).

13. Dispositif (1) selon la revendication 12, **caractérisé en ce que** l'unité de projection (4) comporte un générateur de motifs (7) programmable.

14. Dispositif (1) selon la revendication 13, **caractérisé en ce que** l'unité de projection (4) comporte au moins un arrangement de miroirs numérique (Digital Mirror Device - DMD), au moins un module d'affichage à cristaux liquides transparent (LCD) ou au moins un module d'affichage à cristaux liquides réfléchissant la lumière (LCoS) .

15. Dispositif (1) selon l'une des revendications 12 à 14, **caractérisé en ce que** le dispositif (1) est disposé sur un manipulateur automatique mobile commandé, notamment un robot industriel, l'unité de commande (11) étant conçue pour une utilisation identique répétée des masques de projection créés pour les orientations nécessaires sur l'objet (2) du capteur (3) topométrique utilisé pour les mesurage topométrique, pour un certain nombre de mesures topométriques de cet objet (2) ou d'objets (2) du même type.

16. Programme informatique comprenant des moyens de code de programme pour commander la mise en oeuvre du procédé selon l'une des revendications 1 à 11 lorsque le programme informatique est exécuté sur le dispositif de commande d'un dispositif selon l'une des revendications 12 à 15, le programme informatique étant conçu pour déterminer des surfaces partielles (15) dans les représentations de l'objet (2), lesquelles contiennent un signal rétrodiffusé par l'objet (2) d'un segment de motif de projection (14) du générateur de motifs (7) respectivement projeté sur l'objet (2), et pour créer au moins un masque de projection (Mᵢ), lequel comporte respectivement au moins un segment de motif de projection (14), les segments de motif de projection (14) d'un masque de projection (Mᵢ) étant choisis par le programme informatique de telle sorte que les surfaces partielles déterminées des segments de motif de projection (14) ne se chevauchent pas réciproquement dans les représentations.
